# EUROPEAN PATENT SPECIFICATION

(11) **EP 2 814 208 B1**
(45) Date of publication and mention of the grant of the patent: **03.01.2018**
(21) Application number: 14171498.0
(22) Date of filing: 06.06.2014
(51) Int. Cl.: H04L 12/24, G06N 5/02

(54) **PROGRAM, APPARATUS, AND METHOD FOR CREATING CONFIGURATION REQUIREMENTS**
PROGRAMM, VORRICHTUNG, UND VERFAHREN ZUR ERZEUGUNG VON KONFIGURATIONSANFORDERUNGEN
PROGRAMME, APPAREIL ET PROCÉDÉ DE CRÉATION D'EXIGENCES DE CONFIGURATION

(30) Priority: 14.06.2013 JP 2013126050
(43) Date of publication of application: 17.12.2014
(73) Proprietor: FUJITSU LIMITED, Kawasaki-shi, Kanagawa 211-8588 (JP)
(72) Inventor: Kikuchi, Shinji, Kanagawa, 211-8588 (JP); Matsumoto, Yasuhide, Kanagawa, 211-8588 (JP); Kitajima, Shinya, Kanagawa, 211-8588 (JP); Uchiumi, Tetsuya, Kanagawa, 211-8588 (JP)
(74) Representative: Hoffmann Eitle

(56) References cited:
- WO-A1-2012/161672
- TETSUYA UCHIUMI ET AL: "Misconfiguration detection for cloud datacenters using decision tree analysis", NETWORK OPERATIONS AND MANAGEMENT SYMPOSIUM (APNOMS), 2012 14TH ASIA-PACIFIC, IEEE, 25 September 2012 (2012-09-25), pages 1-4, XP032270848, DOI: 10.1109/APNOMS.2012.6356072 ISBN: 978-1-4673-4494-4

## Description

### FIELD

The embodiments discussed herein are related to a program, apparatus, and method for creating configuration requirements.

### BACKGROUND

There are an increasing number of large-scale information processing systems. In such systems, for example, the resources of a plurality of computers installed in a data center are often provided to the users. In the data center, various apparatuses such as computers and network apparatuses are added or replaced, in accordance with a change in usage of the resources or in order to improve the hardware performance. Then, the settings of the newly installed apparatuses are made, or the configuration of the existing apparatuses is changed. For example, the settings of the network and settings of the operating environment of the hardware and software of the apparatuses may be made.

There has been proposed a multi-tenant information processing system in which information indicating whether each design item of each apparatus depends on a tenant is stored in advance such that, at the time of initially constructing the tenant, the design items depending on the tenant are specified for each apparatus included in the tenant, based on this information. In this proposed system, the design values of the specified design items are calculated so as not to overlap the design values of other tenants.

There has also been proposed a technique that, when changing the configuration of a virtual server in a segment of a tenant, specifies for which network apparatus and in which item the settings need to be changed, based on information on the target segment after the configuration change and information indicating whether the virtual server is present.

There has also been proposed a technique that generates a relationship graph representing the dependency relationship between servers (for example, processing performed by a first server involves the use of a second server), from configuration data including a set of parameter settings defining the software or hardware operation. There has also been proposed a technique that collects configuration data from a plurality of computers and analyzes the configuration data. According to this technique, for example, if all the computers that execute certain software have at least two host bus adapters (HBAs), a rule that a computer that executes the software has at least two HBAs is generated.

Examples of the related art are disclosed in Japanese Laid-open Patent Publications. No. 2012-253550, No. 2012-65015, No. 2010-256978, and No. 2009-48611.

WO 20127161672 A1 relates to a method for configuration policy extraction for an organization having a plurality of composite configuration items. The method includes calculating distances in a configuration space between the composite configuration items of an organization, clustering the composite configuration items into one or more clusters based on the calculated distances, identifying configuration patterns in one or more of the clusters, and extracting at least one configuration policy based on the identified configuration patterns.

"Misconfiguration detection for cloud datacenters using decision tree analysis", Tetsuya Uchimi et al, network operations and management Symposium, 2012 14th Asia-Pacific, IEEE 25 September 2012 pages 1-4 relates to a method for detecting misconfiguration candidates in the servers for large-scale cloud datacenters, which can automatically determine possible misconfigurations by identifying the relations existing among majority of the parameters using statistical decision tree analysis. Also, it relates to a pattern modification method for improving the accuracy of the decision tree approach.

Apparatuses in an information processing system may be managed in units of various sizes (for example, regions, data centers in a region, and racks in a data center). Further, a rule may be set to the setting values of the apparatuses for each of such unit (hereinafter referred to as a "management unit") so as to control the settings of the apparatuses on a per management unit basis. In this case, if settings of an apparatus are made without conforming to the rule of each management unit, the settings of the apparatus might negatively affect operations of the other apparatuses. For example, in the case where overlapping setting values are not allowed for a parameter (for example, identification information) in a certain management unit, if a plurality of apparatuses in this management unit have overlapping setting values, a problem might occur in the operation of the apparatuses (for example, communication between the apparatuses). However, it is not easy to determine what rule is used when making settings in each management unit. For example, the location of information indicating the requirements for the respective attributes on a per management unit basis might be unknown. Further, such information might not exist.

### SUMMARY

The object of the invention is achieved by the subject-matter of the independent claims. Advantageous embodiments are defined in the dependent claims. Further examples are provided for facilitating the understanding of the invention. According to one aspect, the present invention aims to provide a program, apparatus, and method for creating configuration requirements, capable of appropriately determining a requirement corresponding to a management unit of apparatuses.

According to one example, there is provided a computer program which causes a computer to perform a process including: specifying, with reference to information indicating a plurality of management units that manage a plurality of apparatuses and have an inclusion relationship and indicating sets of apparatuses divided by the respective management units, and with reference to setting values of a plurality of attributes stored in association with each of the apparatuses, a management unit having a first feature with regard to setting values of any one of the attributes in each of sets of apparatuses divided by the management unit; detecting, for the setting values of the attribute having the first feature, a second feature established among a plurality of sets of apparatuses that are divided by the specified management unit; and creating information indicating requirements for the setting values of the attribute in the specified management unit, based on the first and second features.

### BRIEF DESCRIPTION OF DRAWINGS

FIG. 1 illustrates a configuration requirement creation apparatus according to a first embodiment;
FIG. 2 illustrates an information processing system according to a second embodiment;
FIG. 3 illustrates an example of hardware of the configuration requirement creation apparatus;
FIG. 4 illustrates an example of software of the configuration requirement creation apparatus;
FIG. 5 illustrates an example of configuration information;
FIG. 6 illustrates an example of groups;
FIG. 7 illustrates an example of a server parameter table;
FIG. 8 illustrates an example of a switch parameter table;
FIG. 9 illustrates an example of a parameter feature table;
FIG. 10 is a flowchart illustrating an example of a process for creating requirements;
FIG. 11 is a flowchart illustrating an example of specifying a scope characterizing a parameter;
FIG. 12 is a flowchart illustrating an example of specifying a scope where parameter values are the same;
FIG. 13 is a flowchart illustrating an example of specifying a scope where parameter values are unique;
FIG. 14 is a flowchart illustrating an example of evaluating the relationship of a parameter between groups;
FIG. 15 is a flowchart illustrating an example of evaluating the relationship between parameters;
FIG. 16 illustrates a specific example of feature extraction;
FIGS. 17 and 18 illustrate examples of templates of OCL formulas;
FIGS. 19 and 20 illustrate examples of constraint tables;
FIG. 21 illustrates an example of new configuration information;
FIG. 22 illustrates an example of a server parameter table;
FIG. 23 is a flowchart illustrating an example of requirement verification;
FIG. 24 illustrates an example of a verification result; and
FIG. 25 illustrates an example of the flow of verification.

### DESCRIPTION OF EMBODIMENTS

Embodiments will be described below with reference to the accompanying drawings, wherein like reference numerals refer to like elements throughout.

### (a) First Embodiment

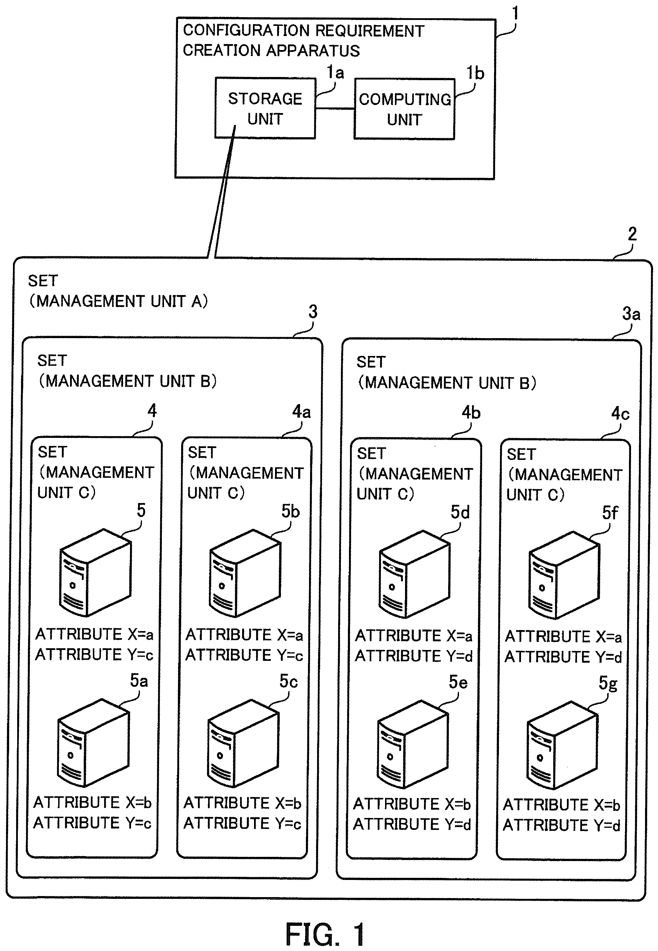

FIG. 1 illustrates a configuration requirement creation apparatus 1 according to a first embodiment. The configuration requirement creation apparatus 1 extracts requirements for settings, from settings of various apparatuses included in an information processing system. There are various types of attributes to be set in each apparatus. Examples of attributes may include identification information of the apparatus (host name, address on the network, and the like), identification information of other apparatuses with which the apparatus communicates in accordance with the function, and so on. Examples of attributes may further include the settings of the hardware and software of the apparatus and so on.

The configuration requirement creation apparatus 1 includes a storage unit 1a and a computing unit 1b. The storage unit 1a may be a volatile storage device such as random access memory (RAM) and the like, or may be a non-volatile storage device such as hard disk drive (HDD), flash memory, and the like. The computing unit 1b may include a central processing unit (CPU), a digital signal processor (DSP), an application specific integrated circuit (ASIC), a field programmable gate array (FPGA), and the like. The computing unit 1b may be a processor that executes programs. The term "processor" as used herein refers to a set of processors (a multiprocessor) as well as a single processor.

The storage unit 1a stores information indicating a plurality of management units that manage a plurality of apparatuses and have an inclusion relationship, and indicating sets of apparatuses divided by the respective management units. For example, in the system as the subject of processing, the plurality of apparatuses are managed in management units A, B, and C having an inclusion relationship. The inclusion relationship is represented by hierarchical structure. A management unit of the higher layer includes management units of the lower layers.

The management unit A is a management unit of a first layer. The management unit B is a management unit of a second layer immediately under the management unit A. The management unit C is a management unit of a third layer immediately under the management unit B. For example, the management unit A may be associated with a region; the management unit B may be associated with a data center; and the management unit C may be associated with a rack. In this case, the above-described inclusion relationship may be regarded as a spatial inclusion relationship among the management units A, B, and C. Note that the number of layers of management units may be two, or may be four or more. For example, under a management unit "data center", a management unit "floor" may be provided; under the "floor", a management unit "server room" may be provided; and, under the "server room", a management unit "rack" may be provided (in this case, there are five layers).

An information processing system under analysis includes, for example, apparatuses 5, 5a, 5b, 5c, 5d, 5e, 5f, and 5g. The apparatuses 5, 5a, 5b, 5c, 5d, 5e, 5f, and 5g are, for example, network apparatuses, storage apparatuses, and the like. A set 2 is a set divided by the management unit A corresponding to the first layer. The set 2 includes the apparatuses 5, 5a, 5b, 5c, 5d, 5e, 5f, and 5g. Sets 3 and 3a are sets divided by the management unit B corresponding to the second layer. The set 3 includes the apparatuses 5, 5a, 5b, and 5c. The set 3a includes the apparatuses 5d, 5e, 5f, and 5g.

Sets 4, 4a, 4b, and 4c are sets divided by the management unit C corresponding to the third layer. The set 4 includes the apparatuses 5 and 5a. The set 4a includes the apparatuses 5b and 5c. The set 4b includes the apparatuses 5d and 5e. The set 4c includes the apparatuses 5f and 5g.

The storage unit 1a stores information indicating setting values of a plurality of attributes associated with each apparatus. For example, each apparatus has attributes X and Y, and has a setting value for each of the attributes X and Y. The following is a specific example. The setting value of the attribute X of the apparatus 5 is a. This relationship is represented by "X = a" (the same representation is used in the following description). The attribute Y of the apparatus 5 is Y = c. In the apparatus 5a, X = b, and Y = c. In the apparatus 5b, X = a, and Y = c. In the apparatus 5c, X = b, and Y = c. In the apparatus 5d, X = a, and Y = d. In the apparatus 5e, X = b, and Y = d. In the apparatus 5f, X = a, and Y = d. In the apparatus 5g, X = b, and Y = d.

The computing unit 1b specifies a management unit having a first feature with regard to setting values of any one of attributes in each of sets of apparatuses divided by the management unit, with reference to the storage unit 1a. For example, as for the attribute X, in each of the sets 4, 4a, 4b, and 4c, there is a feature that a plurality of apparatuses belonging to each set (for example, the apparatuses 5 and 5a of the set 4) have setting values different from each other (for example, the apparatuses of the set 4 have setting values a and b). The sets 4, 4a, 4b, and 4c are sets divided by the management unit C. Accordingly, the computing unit 1b specifies the management unit C as a management unit having a feature that "the setting values of the attribute X are different".

Further, for example, as for the attribute Y, in each of the sets 3 and 3a, there is a feature that a plurality of apparatuses belonging to each set (for example, the apparatuses 5, 5a, 5b, and 5c of the set 3) have the same setting value (for example, the apparatuses of the set 3 have the same setting value c, and the apparatuses of the set 3a have the same setting value d). The sets 3 and 3a are sets divided by the management unit B. Accordingly, the computing unit 1b specifies the management unit B as a management unit having a feature that "the setting values of the attribute Y are the same".

The computing unit 1b detects, for the setting values of the attribute having the first feature, a second feature established among a plurality of sets that are divided by the specified management unit. For example, as for the attribute X, the computing unit 1b has specified the management unit C as a management unit having the first feature that "the setting values of the attribute X are different", as mentioned above. Further, with regard to the setting values of the attribute X of the apparatuses, the setting values a and b are included in each of the sets 4, 4a, 4b, and 4c that are divided by the management unit C. Accordingly, the computing unit 1b detects a feature that "with regard to the setting values of the attribute X, there are overlapping setting values among the sets divided by the management unit C" as the second feature.

Further, for example, as for the attribute Y, the computing unit 1b has specified the management unit B as a management unit having the first feature that "the setting values of the attribute Y are the same", as mentioned above. Further, with regard to the setting values of the attribute Y of the apparatuses, there is no overlapping of setting values of the attribute Y between the sets 3 and 3a that are divided by the management unit B. Accordingly, the computing unit 1b detects a feature that "with regard to the setting values of the attribute Y, there are no overlapping setting values among the sets divided by the management unit B" as the second feature.

The computing unit 1b creates information indicating requirements for the setting values of the attribute in the specified management unit, based on the first and second features. For example, the computing unit 1b creates, for the attribute X, information indicating requirements that "the setting values are different within each of sets divided by the management unit C" and that "overlapping setting values are allowed among the sets divided by the management unit C". Further, for example, the computing unit 1b creates, for the attribute Y, information indicating requirements that "the setting values are the same within each of sets divided by the management unit B" and that "the setting values are different among the sets divided by the management unit B".

According to the configuration requirement creation apparatus 1, the computing unit 1b specifies a management unit having a first feature with regard to setting values of any one of attributes in each of sets of apparatuses, with reference to the storage unit 1a. The computing unit 1b detects, for the setting values of the attribute having the first feature, a second feature established among a plurality of sets that are divided by the specified management unit. The computing unit 1b creates information indicating requirements for the setting values of the attribute in the specified management unit, based on the first and second features.

In this way, it is possible to appropriately determine requirements corresponding to the management unit. For example, there is a case in which a rule is set to setting values of apparatuses on a per management unit basis in order to control the settings of the apparatuses. In this case, if settings of an apparatus are made without conforming to the rule of each management unit, the apparatus might negatively affect operations of the other apparatuses. However, it is not easy to determine in accordance with what rule the settings are made in each management unit.

Accordingly, the configuration requirement creation apparatus 1 extracts a requirement corresponding to a management unit for each attribute, based on information indicating the setting values of the attributes of each apparatus. In doing so, the configuration requirement creation apparatus 1 extracts both a first feature established in each of sets of apparatuses that are divided by a certain management unit, and a second feature established among the sets of apparatuses divided by this management unit. Therefore, it is possible to create more appropriate requirements on a per management unit basis than in the case of extracting only one of the features. In particular, in the case where a certain attribute has a feature in each of sets of apparatuses that are divided by a certain management unit, the attribute is highly likely to have a relationship with the setting values of the attribute in the other sets divided by this management unit. The configuration requirement creation apparatus 1 is capable of appropriately determining such a relationship. This allows the user to appropriately identify the requirements corresponding to the management unit with reference to the created requirements, and thus to make new settings or to change the existing settings. Accordingly, the risk of making settings not conforming to the rule of each management unit may be reduced.

The configuration requirement creation apparatus 1 may check, in advance, the settings of the respective attributes of each apparatus after a change in the settings, against the extracted requirements, and verify whether the setting values of the respective attributes after the change in the settings are appropriate. In this way, it is possible to check whether there is a setting error more quickly and accurately than in the case where the user performs verification. Further, it is possible to reduce the work of the user. In other words, it is possible to improve the efficiency of verification of the settings. As a result, the time taken to change the settings of each apparatus may be reduced.

The computing unit 1b may detect various features, for each attribute. For example, the computing unit 1b may further detect, as a third feature, a relationship that is established between setting values of a first attribute of a first type apparatus included in a certain set and setting values of a second attribute of a second type apparatus included in this set. This makes it possible to create more detailed requirements for the setting values of the attribute.

### (b) Second Embodiment

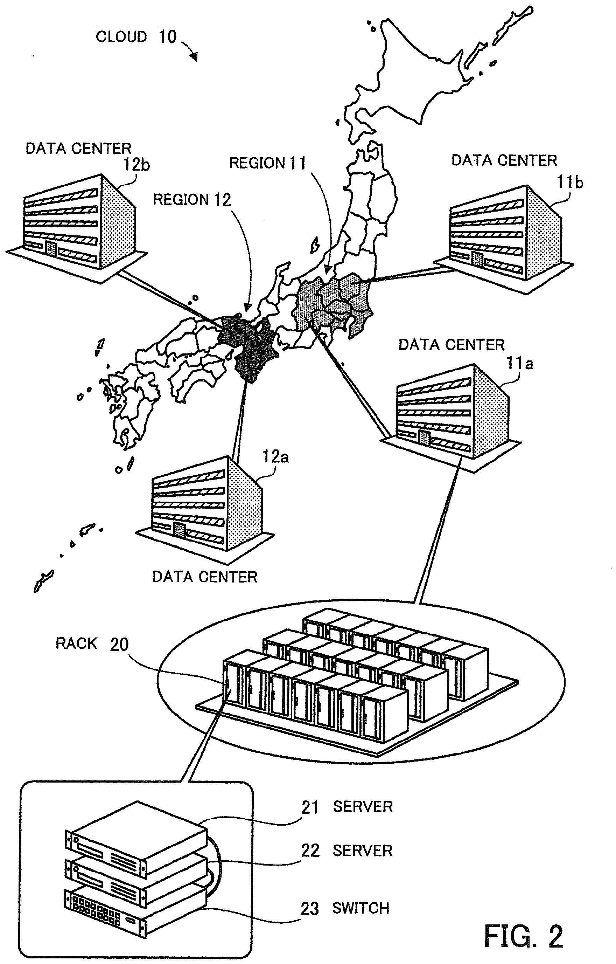

FIG. 2 illustrates an information processing system according to a second embodiment. The information processing system of the second embodiment includes apparatuses such as a plurality of servers and switches. The apparatuses are managed in units called "scopes". A scope is a unit (management unit) of apparatuses included in an information processing system. The scopes have different sizes. The scopes are distinguishable based on the spatial inclusion relationship as will be described below, and therefore may also be called management ranges.

In the second embodiment, the scopes are defined as a cloud, a region, a data center, and a rack, for example. A cloud is the scope of the highest layer. A region is the scope immediately under the cloud. A data center is the scope immediately under the region. A rack is the scope immediately under the data center. That is, the scopes have layers that are distinguished by the spatial scale. For example, a cloud includes regions. Since the cloud is a set of regions, the cloud may be considered to have a greater spatial dimension than the region. Similarly, a region includes data centers. A data center includes racks.

A cloud 10 is an instance of the scope defined as a cloud. Regions 11 and 12 are instances of the scope defined as a region. Data centers 11a, 11b, 12a, and 12b are instances of the scope defined as a data center. A rack 20 is an instance of the scope defined as a rack.

The regions 11 and 12 belong to the cloud 10. The data centers 11a and 11b belong to the region 11. The data centers 12a and 12b belong to the region 12. In each of the data centers 11a, 11b, 12a, and 12b, a plurality of racks are provided. In each of the racks, a plurality of servers and a switch are provided.

For example, the data center 11a includes the rack 20. The rack 20 includes servers 21 and 22 and a switch 23. The servers 21 and 22 are server computers having hardware resources and software resources to be provided to the users. A usage system in which the user uses the resources of computers provided in a data center through a network, instead of using their own computer resources, is often called cloud computing.

The switch 23 is a relay apparatus that relays communication between the servers 21 and 22 and the servers in other racks and servers in other data centers. In this example, the switch 23 is a Layer 3 (L3) switch that transmits data on the third layer of the Open Systems Interconnection (OSI) reference model using Internet Protocol (IP). The switch 23 may be a router. In the following, a description will be given in connection with the case of Internet Protocol Version 4 (IPv4). However, the same applies to the case of Internet Protocol Version 6 (IPv6).

The rack 20 is a set of a plurality of apparatuses, namely, the servers 21 and 22 and the switch 23. The data center 11a is a set of a plurality of apparatuses in a plurality of racks (including the rack 20) in the data center 11a. The data center 11b is a set of a plurality of apparatuses in a plurality of racks in the data center 11b. The data center 12a is a set of a plurality of apparatuses in a plurality of racks in the data center 12a. The data center 12b is a set of a plurality of apparatuses in a plurality of racks in the data center 12b.

The region 11 is a set of a plurality of apparatuses in the data centers 11a and 11b. The region 12 is a set of a plurality of apparatuses in the data centers 12a and 12b. The cloud 10 is a set of a plurality of apparatuses in the regions 11 and 12.

In this way, if the instances of a scope is regarded as a set of apparatuses, the regions 11 and 12 may be considered as subsets of the cloud 10. The data centers 11a and 11b may be considered as subsets of the region 11. The rack 20 may be considered as a subset of the data center 11a.

In the second embodiment, the information processing system is provided with a function of extracting requirements for the attributes of each apparatus on a per scope basis. This function is realized by a configuration requirement creation apparatus.

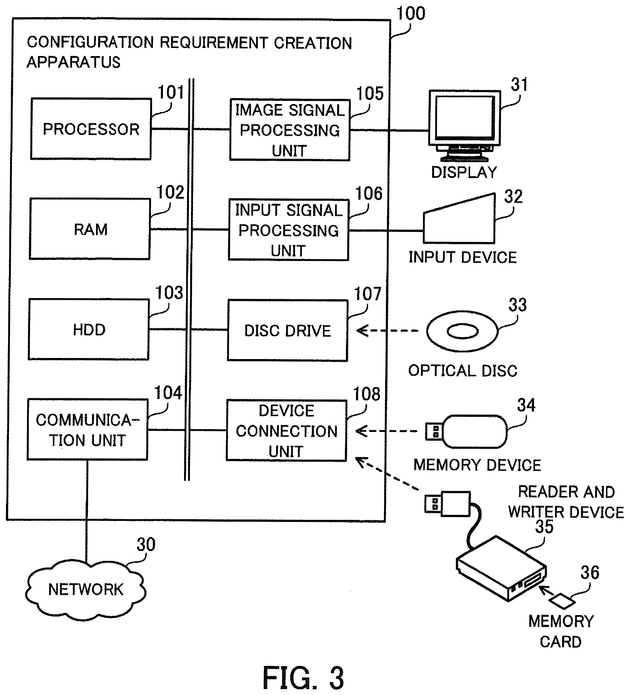

FIG. 3 illustrates an example of hardware of a configuration requirement creation apparatus 100. The configuration requirement creation apparatus 100 includes a processor 101, a RAM 102, an HDD 103, a communication unit 104, an image signal processing unit 105, an input signal processing unit 106, a disc drive 107, and a device connection unit 108. Each unit is connected to a bus of the configuration requirement creation apparatus 100.

The processor 101 controls information processing performed by the configuration requirement creation apparatus 100. The processor 101 may be a multiprocessor. Examples of the processor 101 include a CPU, a DSP, an ASIC, an FPGA, and the like. Alternatively, the processor 101 may be a combination of two or more of the devices selected from CPU, DSP, ASIC, FPGA, and the like.

The RAM 102 serves as a primary storage device of the configuration requirement creation apparatus 100. The RAM 102 temporarily stores at least part of operating system (OS) programs and application programs that are executed by the processor 101. The RAM 102 also stores various types of data that are used in processing performed by the processor 101.

The HDD 103 serves as a secondary storage device of the configuration requirement creation apparatus 100. The HDD 103 magnetically writes data to and reads data from an internal magnetic disk. The HDD 103 stores the OS program, application programs, and various types of data. The configuration requirement creation apparatus 100 may include other types of secondary storage devices such as a flash memory, a solid state drive (SSD), and the like, and may include a plurality of secondary storage devices.

The communication unit 104 is an interface capable of communicating with other computers via a network 30. The communication unit 104 may be a wired interface or a wireless interface.

The image signal processing unit 105 outputs an image to a display 31 connected to the configuration requirement creation apparatus 100, in accordance with an instruction from the processor 101. Examples of the display 31 include a cathode ray tube (CRT) display, a liquid crystal display, and the like.

The input signal processing unit 106 obtains an input signal from an input device 32 connected to the configuration requirement creation apparatus 100, and outputs the input signal to the processor 101. Examples of the input device 32 include pointing devices (such as a mouse, a touch panel, and the like), a keyboard, and the like.

The disc drive 107 is a drive unit that reads programs and data from an optical disc 33 by using laser beams or the like. Examples of the optical disc 33 include a digital versatile disc (DVD), a DVD-RAM, a compact disc read only memory (CD-ROM), a CD-Recordable (CD-R), a CD-Rewritable (CD-RW), and the like. The disc drive 107 reads the programs and data from the optical disc 33, and stores the read programs and data in the RAM 102 or the HDD 103, in accordance with an instruction from the processor 101, for example.

The device connection unit 108 is a communication interface that connects peripheral devices to the configuration requirement creation apparatus 100. For example, a memory device 34 and a reader and writer device 35 may be connected to the device connection unit 108. The memory device 34 is a recording medium having a function for communicating with the device connection unit 108. The reader and writer device 35 writes data to and reads data from a memory card 36. The memory card 36 is a card-type recording medium. The device connection unit 108 reads programs and data from the memory device 34 or the memory card 36, and stores the read programs and data in the RAM 102 or the HDD 103, in accordance with an instruction from the processor 101, for example.

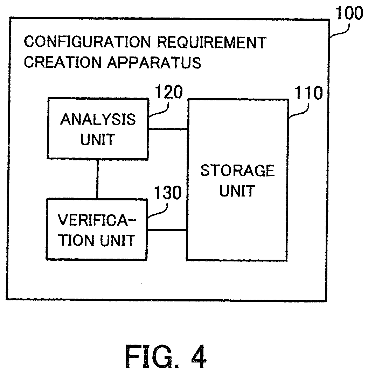

FIG. 4 illustrates an example of software of the configuration requirement creation apparatus 100. The configuration requirement creation apparatus 100 includes a storage unit 110, an analysis unit 120, and a verification unit 130. The storage unit 110 may be realized as a storage area reserved in the RAM 102 or the HDD 103. The analysis unit 120 and the verification unit 130 may be realized as modules of software executed by the processor 101.

The storage unit 110 stores configuration information indicating scopes in the information processing system of FIG. 2 and sets of apparatuses divided by each scope. Hereinafter, each set of apparatuses is referred to as a group. Further, a group divided by any one of the scopes may be referred to as a group divided by "the name of a scope (for example, rack)". It is possible to identify the layer of the scope from the name of the scope. Further, the storage unit 110 stores parameter information indicating attributes (hereinafter referred to as "parameters") that may be set to each apparatus and setting values of the attributes.

The analysis unit 120 extracts a feature of setting values of a parameter corresponding to a scope, based on the configuration information and the parameter information stored in the storage unit 110. More specifically, the analysis unit 120 extracts a features, such as a pattern of setting values of each parameter, that are established in each rack, each data center, and each region. Further, the analysis unit 120 extracts, for the parameter whose feature is detected in any one of the scopes, a feature established among a plurality of groups that are divided by the scope. Further, the analysis unit 120 extracts a feature established between parameters in the same group that is divided by the scope. The analysis unit 120 creates parameter requirement information indicating the requirements for the respective parameters corresponding to the scope, based on the extracted features, and stores the parameter requirement information in the storage unit 110.

The verification unit 130 acquires configuration information and parameter information after a change associated with addition or replacement of an apparatus in the information processing system. The verification unit 130 verifies whether the parameter information after the change is appropriate, based on the acquired information and the parameter requirement information created by the analysis unit 120. The verification unit 130 provides the verification result to the user. For example, the verification unit 130 causes the display 31 to display the verification result.

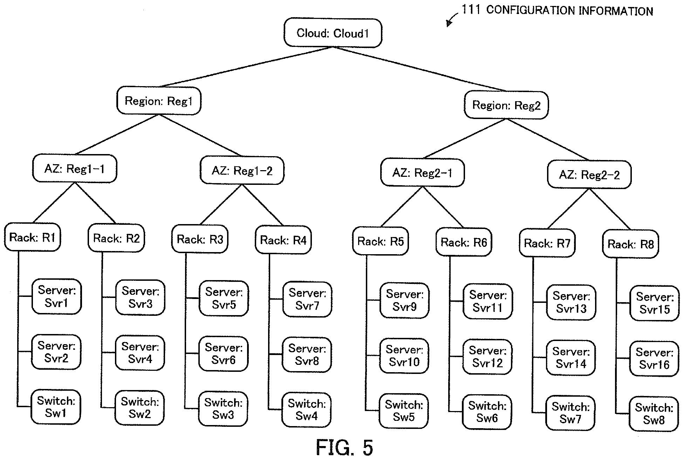

FIG. 5 illustrates an example of configuration information. Configuration information 111 is stored in advance in the storage unit 110. The configuration information 111 indicates scopes, the inclusion relationship among the scopes, and groups divided by the scopes. More specifically, the configuration information 111 indicates that: the cloud 10 (Cloud1) is present in the scope defined as a cloud (Cloud); a scope defined as a region (Region) is present immediately under the scope defined as a cloud (Cloud); and the region 11 (Reg1) and the region 12 (Reg2) are present immediately under the cloud 10 (Cloud1).

The configuration information 111 also indicates that: a scope defined as a data center (Availability Zone (AZ)) is present immediately under the scope defined as a region (Region); and the data center 11a (Reg1-1) and the data center 11b (Reg1-2) are present immediately under the region 11 (Reg1). The relationship between the region 12 and the data centers 12a and 12b is also indicated in the same way.

The configuration information 111 also indicates that: a scope defined as a rack (Rack) is present immediately under the scope defined as a data center (AZ); and the rack 20 (R1) and another rack (R2) are present immediately under the data center 11a. The relationships between the data centers 11b, 12a, and 12b and racks under the respective data centers are also indicated in the same way.

The configuration information 111 also indicates that the servers 21 and 22 (Svr1 and Svr2) and the switch 23 (Sw1) are present in the rack 20 (R1). Apparatuses in other racks are also indicated in the same way. According to the configuration information 111, each of the data centers 11a, 11b, 12a, and 12b includes two racks. Each rack includes two servers and one switch.

The configuration information 111 may be regarded as information defining instances of a class of each scope, and links between the instances. The configuration information 111 also includes links between instances of a class of each apparatus and an instance of a scope. The configuration information 111 may be represented by a Unified Modeling Language (UML) object diagram, for example.

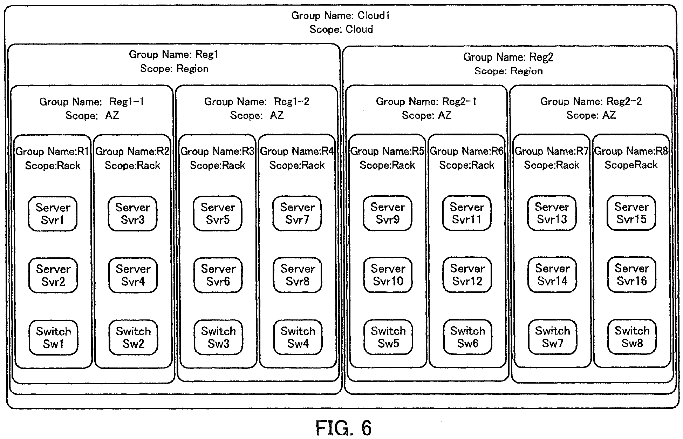

FIG. 6 is illustrates an example of groups. The relationships indicated by the diagram of FIG. 6 are based on the configuration information 111. The diagram indicates that a group with the group name "R1" has two servers (Svr1 and Svr2) and one switch (Sw1) as its elements. The diagram also indicates elements of each of the groups with group names "R2" through "R8". If the relationship between a group and its elements is represented by "group name = {elements}", these relationships are represented as follows: R1 = {Svr1, Svr2, Sw1}; R2 = {Svr3, Svr4, Sw2}; R3 = {Svr5, Svr6, Sw3}; R4 = {Svr7, Svr8, Sw4}; R5 = {Svr9, Svr10, Sw5}; R6 = {Svr11, Svr12, Sw6}; R7 = {Svr13, Svr14, Sw7}; and R8 = {Svr15, Svr16, Sw8}.

The diagram also indicates that: a group with the group name "Reg1-1" has four servers (Svr1 through Svr4) and two switches (Sw1 and Sw2) as its elements; a group with the group name "Reg1-2" has four servers (Svr5 through Svr8) and two switches (Sw3 and Sw4) as its elements; a group with the group name "Reg2-1" has four servers (Svr9 through Svr12) and two switches (Sw5 and Sw6) as its elements; and a group with the group name "Reg2-2" has four servers (Svr13 through Svr16) and two switches (Sw7 and Sw8) as its elements.

The diagram also indicates that: a group with the group name "Reg1" has eight servers (Svr1 through Svr8) and four switches (Sw1 through Sw4) as its elements; and a group with the group name "Reg2" has eight servers (Svr9 through Svr16) and four switches (Sw5 through Sw8) as its elements.

The diagram also indicates that: a group with the group name "Cloud1" has sixteen servers (Svr1 through Svr16) and eight switches (Sw1 through Sw8) as its elements.

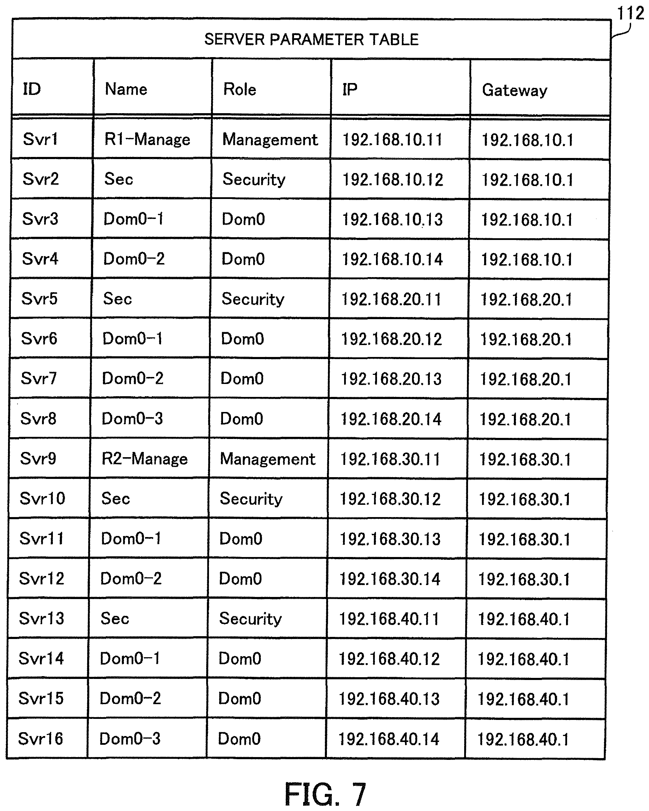

FIG. 7 illustrates an example of a server parameter table. A server parameter table 112 is stored in advance in the storage unit 110. The server parameter table 112 stores information indicating setting values of parameters of each server. The server parameter table 112 contains the following items: ID (Identifier), Name, Role, IP, and Gateway. Each item name represents the type of parameter, and the registered information in each item represents the setting value of the parameter.

In the item "ID", the ID of a server is registered. In the item "Name", the name of the server is registered. In the item "Role", information indicating the role of the server is registered. In the item "IP", the IP address of the server is registered. In the item "Gateway", the IP address of a default gateway is registered.

For example, the server parameter table 112 stores a record indicating that: ID is "Svr1"; Name is "Rl-Manage"; Role is "Management"; IP is "192.168.10.11"; and Gateway is "192.168.10.1". The Role "Management" indicates that the server is responsible for the operations management function. The Role "Security" indicates that the server is responsible for the security function. The Role "Dom0" indicates that the server is responsible for operating a virtual machine.

Similarly, the server parameter table 112 also stores setting values of the respective parameters for the other servers (ID "Svr2" through ID "Svr16").

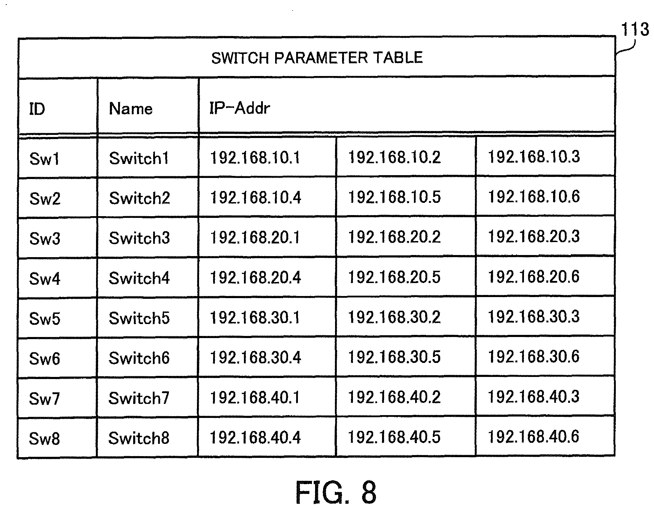

FIG. 8 illustrates an example of a switch parameter table. A switch parameter table 113 is stored in advance in the storage unit 110. The switch parameter table 113 stores information indicating setting values of parameters of each switch. The switch parameter table 113 contains the following items: ID, Name, and IP-Addr. Each item name represents the type of parameter, and the registered information in each item represents the setting value of the parameter.

In the item "ID", the ID of a switch is registered. In the item "Name", the name of the switch is registered. In the item "IP-Addr", the IP addresses assigned to respective network interfaces of the switch are registered.

For example, the switch parameter table 113 stores a record indicating that: ID is "Sw1"; Name is "Switch1"; IP-Addr is "192.168.10.1", "192.168.10.2" and "192.168.10.3". Similarly, the switch parameter table 113 also stores setting values of the respective parameters for the other switches (ID "Sw2" through ID "Sw8").

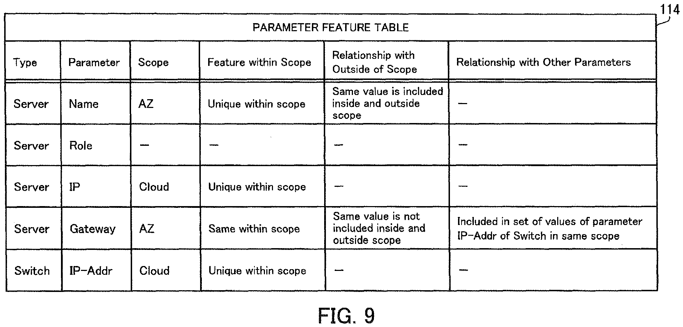

FIG. 9 illustrates an example of a parameter feature table. A parameter feature table 114 is created by the analysis unit 120 based on the configuration information 111, the server parameter table 112, and the switch parameter table 113, and is stored in the storage unit 110. The parameter feature table 114 contains the following items: Type, Parameter, Scope, Feature within Scope, Relationship with Outside of Scope, and Relationship with Other Parameters.

In the item "Type", information indicating the type of apparatus (component) is registered. In the item "Parameter", information indicating the type of parameter is registered. In the item "Scope", information indicating a scope is registered. In the item "Feature within Scope", information indicating a feature of the parameter extracted within the scope is registered. In the item "Relationship with Outside of Scope", information indicating a feature of the parameter based on comparison with the other groups divided by the same scope is registered. In the item "Relationship with Other Parameters", information indicating a feature with respect to other parameters within the scope is registered.

For example, the parameter feature table 114 stores a record indicating that: Type is "Server"; Parameter is "Name"; Scope is "AZ"; Feature within Scope is "Unique within scope"; Relationship with Outside of Scope is "Same value is included inside and outside scope"; and Relationship with Other Parameters is "-(hyphen)" (not registered).

This indicates that, with regard to the parameter "Name" of the server, the values are unique within each group divided by the scope "AZ". This also indicates that, with regard to the parameter "Name" of the server, the same setting value is included in different groups divided by the scope "AZ". This also indicates that the parameter "Name" of the server does not have any feature with respect to other parameters, within each group divided by the scope "AZ".

Further, the parameter feature table 114 stores a record indicating that: Type is "Server"; Parameter is "Role"; Scope is "-"; Feature within Scope is "-"; Relationship with Outside of Scope is "-"; and Relationship with Other Parameters is "-". This indicates that the parameter "Role" of the server does not have any feature with respect to any of the scopes.

Further, the parameter feature table 114 stores a record indicating that: Type is "Server"; Parameter is "IP"; Scope is "Cloud"; Feature within Scope is "Unique within scope"; Relationship with Outside of Scope is "-"; and Relationship with Other Parameters is "-".

This indicates that, with regard to the parameter "IP" of the server, the values are unique within each group divided by the scope "Cloud". This also indicates that the parameter "IP" of the server does not have any relationship with other groups divided by the scope "Cloud" (because the scope "Cloud" is the highest layer). This also indicates that the parameter "IP" of the server does not have any feature with respect to other parameters, within each group divided by the scope "Cloud".

Further, the parameter feature table 114 stores a record indicating that: Type is "Server"; Parameter is "Gateway"; Scope is "AZ"; Feature within Scope is "Same within scope"; Relationship with Outside of Scope is "Same value is not included inside and outside scope"; and Relationship with Other Parameters is "Included in set of values of parameter IP-Addr of Switch in same scope".

This indicates that, with regard to the parameter "Gateway" (default gateway) of the server, the values are the same within each group divided by the scope "AZ". This also indicates that, with regard to the parameter "Gateway" of the server, the same setting value is not included in different groups divided by the scope "AZ". This also indicates that the setting values of the parameter "Gateway" of the server are included in a set of setting values of the parameter "IP-Addr" of the switch that are present in the same group divided by the scope "AZ".

Further, the parameter feature table 114 stores a record indicating that: Type is "Switch"; Parameter is "IP-Addr"; Scope is "Cloud"; Feature within Scope is "Unique within scope"; Relationship with Outside of Scope is "-"; and Relationship with Other Parameters is "-".

This indicates that, with regard to the parameter "IP-Addr" (IP address) of the switch, the values are unique within each group divided by the scope "Cloud". This also indicates that the parameter "IP-Addr" of the switch does not have any relationship with other groups divided by the scope "Cloud" (because the scope "Cloud" is the highest layer). This also indicates that the parameter "IP-Addr" of the switch does not have any feature with respect to other parameters, within each group divided by the scope "Cloud".

Note that, in the parameter feature table 114, information on the parameter "Name" of the switch is omitted. However, similar to the case of the parameter "IP-Addr", the values of the parameter "Name" of the switch are unique within each group divided by the scope "Cloud".

Further, the parameter feature table 114 may be considered as information indicating rules to be followed by the respective existing parameters, and therefore may be regarded as information indicating requirements for the respective parameters. Next, a description will be given of the operation of the configuration requirement creation apparatus 100. First, the procedure of the whole process performed by the configuration requirement creation apparatus 100 will be described. The following process starts when an instruction for creating requirements is input to the configuration requirement creation apparatus 100 from the user. For example, the user may input the instruction to the configuration requirement creation apparatus 100 by using the input device 32. At this point, the user may specify the configuration information 111, the server parameter table 112, and the switch parameter table 113 for the configuration requirement creation apparatus 100.

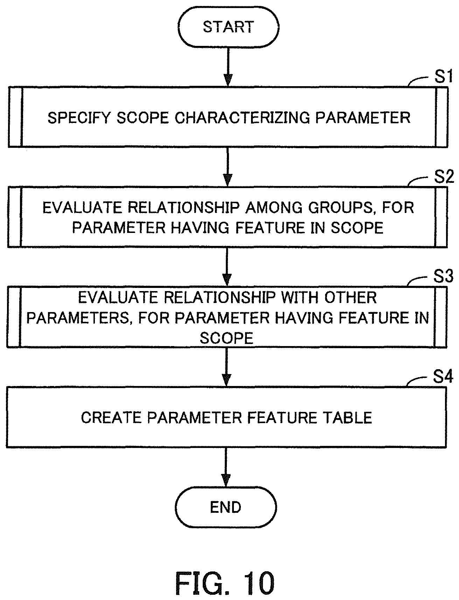

FIG. 10 is a flowchart illustrating an example of a process for creating requirements. In the following, the process illustrated in FIG. 10 will be described in order of step number.
(S1) The analysis unit 120 specifies a scope characterizing any one of the parameters, based on the configuration information 111, the server parameter table 112, and the switch parameter table 113 that are stored in the storage unit 110. Since the scopes have a hierarchical inclusion relationship, specifying a scope may be regarded as specifying a layer corresponding to the scope.
(S2) The analysis unit 120 evaluates, for the parameter having a feature in the scope specified in step S1, the relationship among groups divided by the scope.
(S3) The analysis unit 120 evaluates, for the parameter having a feature in the scope specified in step S1, the relationship with other parameters.
(S4) The analysis unit 120 creates a parameter feature table 114 based on the results in steps S1 through S3, and stores the parameter feature table 114 in the storage unit 110. The analysis unit 120 may present the contents of the parameter feature table 114 to the user. For example, the analysis unit 120 may present the contents of the parameter feature table 114 to the user by causing the display 31 to display the contents.

Note that the steps S2 and S3 may be performed in any order. For example, the analysis unit 120 may perform steps S1, S3, S2, and S4 in this order.

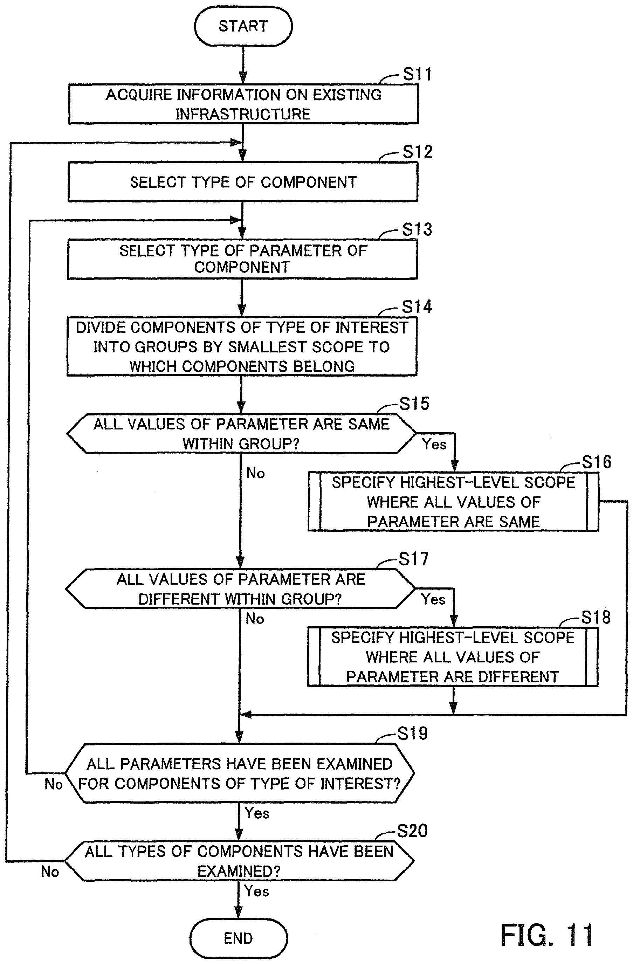

FIG. 11 is a flowchart illustrating an example of specifying a scope characterizing a parameter. In the following, the process illustrated in FIG. 11 will be described in order of step number. The procedure described below corresponds to the procedure of step S1 of FIG. 10.
(S11) The analysis unit 120 acquires information on the existing infrastructure, with reference to the storage unit 110. As mentioned above, the information to be used may be specified by the user. In this example, the analysis unit 120 acquires the configuration information 111, the server parameter table 112, and the switch parameter table 113.
(S12) The analysis unit 120 selects the type of component. In the example of the second embodiment, the types of components include server and switch. The analysis unit 120 selects either one of the server or the switch as the type of component. The analysis unit 120 performs the subsequent steps, for the components of the selected type.
(S13) The analysis unit 120 selects the type of parameter, for the components of the type of interest. For example, in the case where the server is selected, the types of parameters include Name, Role, IP, and Gateway, according to the server parameter table 112. The analysis unit 120 selects one of these types using an arbitrary selection method. Similarly, in the case where the switch is selected, the analysis unit 120 selects one of the types of parameters, namely, Name and IP-Addr, from the switch parameter table 113. Note that although the types of parameters of the server and switch include ID, it is already known that the IDs of the respective elements are unique regardless of the scope. Therefore, the analysis unit 120 excludes ID from the subject of analysis. The analysis unit 120 performs the subsequent steps, for the selected type of parameter.
(S14) The analysis unit 120 divides the components of the type of interest into groups by the smallest scope to which the components belong. For example, in the case where the server is selected as the type of component, the smallest scope to which the servers belong is a rack. Accordingly, the analysis unit 120 divides the servers into groups by rack. Similarly, in this example, in the case where the switch is selected as the type of component, the smallest scope to which the switches belong is a rack. Accordingly, the analysis unit 120 first divides the switches into groups by rack.
(S15) The analysis unit 120 determines, for the components of the type of interest, whether all the values of the parameter of interest are the same within each of the groups divided in step S14. If all the values are the same, the process proceeds to step S16. If not all the values are the same, the process proceeds to step S17.
(S16) The analysis unit 120 specifies the highest-level (the largest) scope where all the values of the parameter of interest are the same. The details of the process will be described below. Then, the process proceeds to step S19.
(S17) The analysis unit 120 determines, for the components of the type of interest, whether all the values of the parameter of interest are different within each of the groups divided in step S14. If all the values are different, the process proceeds to step S18. If not all the values are different, the process proceeds to step S19.
(S18) The analysis unit 120 specifies the highest-level (the largest) scope where all the values of the parameter of interest are different. The details of the process will be described below. Then, the process proceeds to step S19.
(S19) The analysis unit 120 determines, for the components of the type of interest, whether all the parameters have been examined. If all the parameters have been examined for the components of the type of interest, the process proceeds to step S20. If not all the parameters have been examined for the components of the type of interest, the process returns to step S13.
(S20) The analysis unit 120 determines whether all the types of components have been examined. If all the types of components have been examined, the process ends. If not all the types of components have been examined, the process returns to step S12.

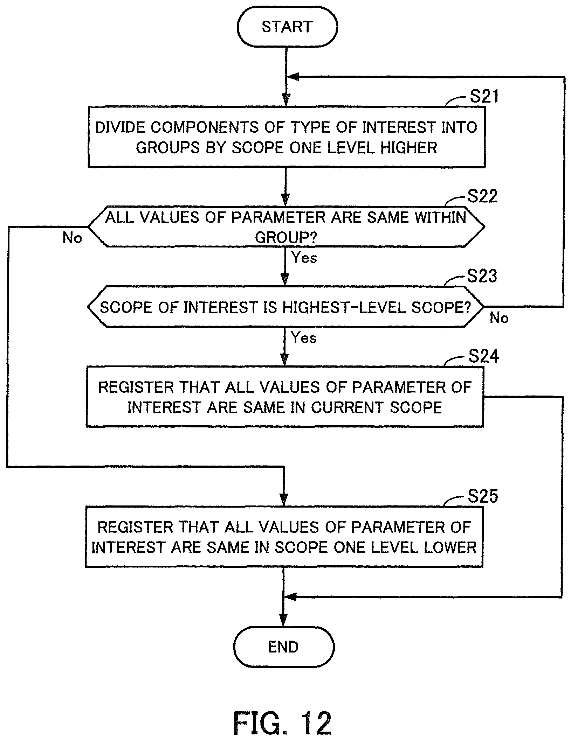

FIG. 12 is a flowchart illustrating an example of specifying a scope where parameter values are the same. In the following, the process illustrated in FIG. 12 will be described in order of step number. The procedure described below corresponds to the procedure of step S16 of FIG. 11.
(S21) The analysis unit 120 enlarges the scope by one level, and divides the components of the type of interest into groups. Enlarging the scope by one level indicates changing the scope of interest from the current scope to the scope one level higher. For example, if the current scope is the rack, the scope one level higher is the data center. For example, the group "Reg1-1" is a group of the scope one level larger than groups "R1" and "R2".
(S22) The analysis unit 120 determines, for the components of the type of interest, whether all the values of the parameter of interest are the same within each of the groups divided in step S21. If all the values are the same, the process proceeds to step S23. If not all the values are the same, the process proceeds to step S25.
(S23) The analysis unit 120 determines whether there is a higher-level scope than the scope of interest. If there is no higher-level scope, the process proceeds to step S24. If there is a higher-level scope, the process proceeds to step S21. In other words, if it is not possible to further enlarge the scope of interest, the process proceeds to step S24. If it is possible to further enlarge the scope, the process proceeds to step S21.
(S24) The analysis unit 120 registers, in the storage unit 110, information indicating that all the values of the parameter of interest of the components of the type of interest are the same in the current scope. Then, the process ends.
(S25) The analysis unit 120 registers, in the storage unit 110, information indicating that all the values of the parameter of interest are the same in the scope one level lower than the current scope. Then, the process ends. Each of the parameters registered in steps S24 and S25 is the parameter having a feature within the scope.

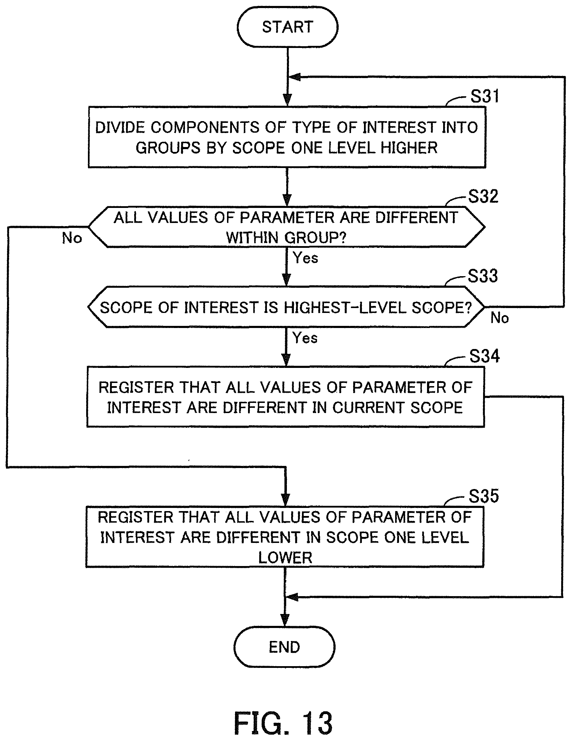

FIG. 13 is a flowchart illustrating an example of specifying a scope where parameter values are unique. In the following, the process illustrated in FIG. 13 will be described in order of step number. The procedure described below corresponds to the procedure of step S18 of FIG. 11.
(S31) The analysis unit 120 enlarges the scope by one level, and divides the components of the type of interest into groups.
(S32) The analysis unit 120 determines, for the components of the type of interest, whether all the values of the parameter of interest are different within each of the groups divided in step S31. If all the values are different, the process proceeds to step S33. If not all the values are different, the process proceeds to step S35.
(S33) The analysis unit 120 determines whether the scope of interest is the highest-level scope. If the scope of interest is the highest-level scope, the process proceeds to step S34. If the scope of interest is not the highest-level scope, the process returns to step S31. In other words, if it is not possible to further enlarge the scope of interest, the process proceeds to step S34. If it is possible to further enlarge the scope, the process proceeds to step S31.
(S34) The analysis unit 120 registers, in the storage unit 110, information indicating that all the values of the parameter of interest of the components of the type of interest are different in the current scope. Then, the process ends.
(S35) The analysis unit 120 registers, in the storage unit 110, information indicating that all the values of the parameter of interest are different in the scope one level lower than the current scope. Then, the process ends. Each of the parameters registered in steps S34 and S35 is the parameter having a feature within the scope.

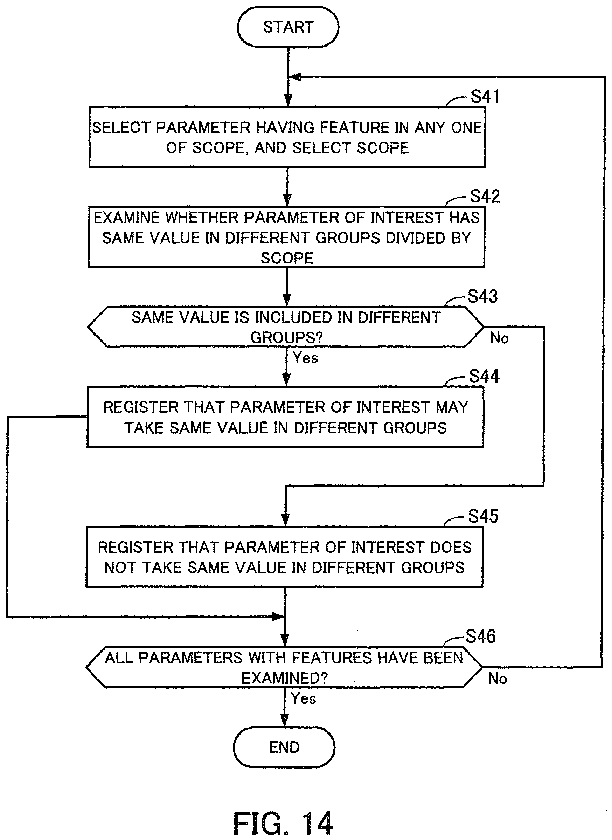

FIG. 14 is a flowchart illustrating an example of evaluating the relationship of a parameter between groups. In the following, the process illustrated in FIG. 14 will be described in order of step number. The procedure described below corresponds to the procedure of step S2 of FIG. 10.
(S41) The analysis unit 120 selects a parameter having a feature in any one of the scopes, and selects the scope. The analysis unit 120 has already specified a parameter having a feature that the setting values are the same or the setting values are different in any one of the scopes and the scope, from the results of the processes illustrated in FIGS. 12 and 13. The analysis unit 120 selects a parameter and a scope based on these results. The analysis unit 120 performs the subsequent steps, for the selected parameter and scope.
(S42) The analysis unit 120 examines whether the parameter of interest has the same value in different groups divided by the scope of interest.
(S43) The analysis unit 120 determines, for the values of the parameter, whether the same value is included in different groups, based on the examination result. If the same value is included, the process proceeds to step S44. If the same value is not included, the process proceeds to step S45.
(S44) The analysis unit 120 registers, in the storage unit 110, information indicating that the parameter of interest may take the same value in different groups divided by the scope of interest. Then, the process proceeds to step S46.
(S45) The analysis unit 120 registers, in the storage unit 110, information indicating that the parameter of interest does not take the same value in different groups divided by the scope of interest.
(S46) The analysis unit 120 determines whether all the parameters each having a feature within a scope have been examined. If all the parameters each having a feature within a scope have been examined, the process ends. If not all the parameters each having a feature within a scope have been examined, the process returns to step S41. In step S41, the analysis unit 120 selects a pair of an unexamined parameter and a scope.

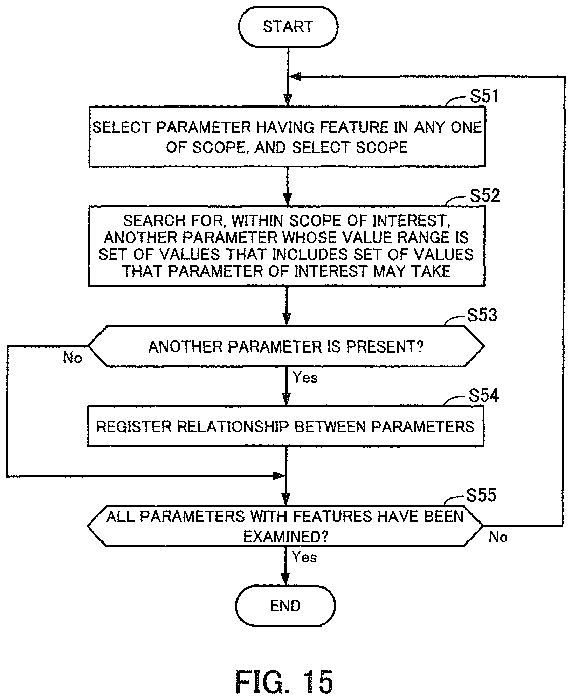

FIG. 15 is a flowchart illustrating an example of evaluating the relationship between parameters. In the following, the process illustrated in FIG. 15 will be described in order of step number. The procedure described below corresponds to the procedure of step S3 of FIG. 10.
(S51) The analysis unit 120 selects a parameter having a feature in any one of the scopes, and selects the scope. The analysis unit 120 has already specified a parameter having a feature that the setting values are the same or the setting values are different in any one of the scopes and the scope, from the results of the processes illustrated in FIGS. 12 and 13. The analysis unit 120 selects a parameter and a scope based on these results. The analysis unit 120 performs the subsequent steps, for the selected parameter and scope.
(S52) The analysis unit 120 searches for, within the scope of interest, another parameter whose value range is a set of values that includes a set of values that the parameter of interest may take.
(S53) The analysis unit 120 determines whether the other parameter is present, based on the search result. If the other parameter is present, the process proceeds to step S54. If the other parameter is not present, the process proceeds to step S55.
(S54) The analysis unit 120 registers, in the storage unit 110, the relationship between the parameter of interest and the detected other parameter.
(S55) The analysis unit 120 determines whether all the parameters each having a feature within a scope have been examined. If all the parameters each having a feature within a scope have been examined, the process ends. If not all the parameters each having a feature within a scope have been examined, the process returns to step S51. In step S51, the analysis unit 120 selects a pair of an unexamined parameter and a scope.

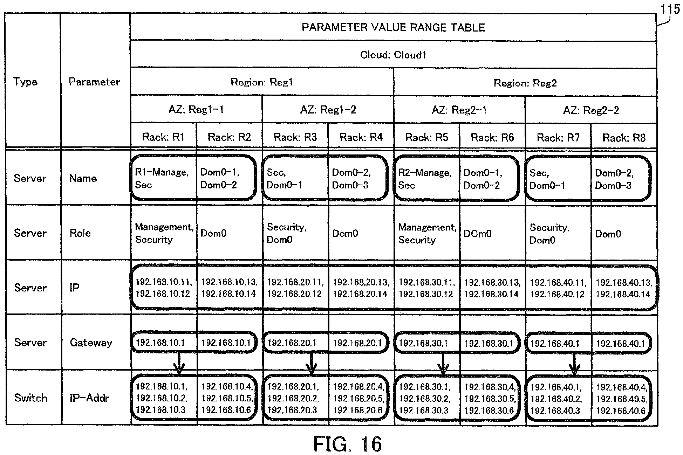

FIG. 16 illustrates a specific example of feature extraction. A parameter value range table 115 is created by the analysis unit 120 based on the configuration information 111, the server parameter table 112, and the switch parameter table 113, and is stored in the storage unit 110. According to the parameter value range table 115, the analysis unit 120 extracts the following features for the respective parameters by the process of step S1 of FIG. 10.
(a1) As for the parameter "Name" of the type "Server", the setting values are unique within each group divided by the scope "AZ". This is because although the values of the "Name" are unique within each group divided by the scope "AZ", there are overlapping values (for example, "Sec", "Dom0-1", and "Dom0-2") for "Name" within each group divided by the scope "Region" one level higher.
(a2) As for the parameter "IP" of the type "Server", the setting values are unique within each group divided by the scope "Cloud".
(a3) As for the parameter "Gateway" of the type "Server", all the setting values are the same within each group divided by the scope "AZ". This is because although all the values of the "Gateway" are the same within each group divided by the scope "AZ", the values of "Gateway" are different within each group divided by the scope "Region" one level higher.

More specifically, all the values of "Gateway" in the group "Reg1-1" are the same value "192.168.10.1". All the values of "Gateway" in the group "Reg1-2" are the same value "192.168.20.1". All the values of "Gateway" in the group "Reg2-1" are the same value "192.168.30.1". All the values of "Gateway" in the group "Reg2-2" are the same value "192.168.40.1". On the other hand, in the group "Reg1", "Gateway" has different values, "192.168.10.1" and "192.168.20.1". Further, in the group "Reg2", "Gateway" has different values, "192.168.30.1" and "192.168.40.1".
(a4) As for the parameter "IP-Addr" of the type "Switch", the setting values are unique within each group divided by the scope "Cloud".

Further, the analysis unit 120 extracts the following features for the respective parameters of the above-described (a1) through (a4) by the process of step S2 of FIG. 10.
(b1) As for the parameter "Name" of the type "Server", the same setting value is included in different groups divided by the scope "AZ". This is because each of the values "Sec", "Dom0-1", "Dom0-2", and "Dom0-3" is included in each of the groups "Reg1-1", "Reg1-2", "Reg2-1", and "Reg2-2" divided by the scope "AZ".
(b2) As for the parameter "Gateway" of the type "Server", the same setting value is not included in different groups divided by the scope "AZ". This is because, in the groups "Regl-1", "Regl-2", "Reg2-1", and "Reg2-2" divided by the scope "AZ", all the values of "Gateway" are different values, "192.168.10.1", "192.168.20.1", "192.168.30.1", "192.168.40.1".

Further, the analysis unit 120 extracts the following features for the respective parameters of the above-described (a1) through (a4) by the process of step S3 of FIG. 10.
(c1) The setting values of the parameter "Gateway" of the type "Server" are included in a set of values of the parameter "IP-Addr" of the type "Switch" that are present in the same group divided by the scope "AZ". This is because there are the following relationships between two parameters in each of the groups "Regl-1", "Regl-2", "Reg2-1", and "Reg2-2" divided by the scope "AZ".

In the group "Regl-1", the value "192.168.10.1" of the parameter "Gateway" of the type "Server" is included in a set of six values "192.168.10.1" through "192.168.10.6" of the parameter "IP-Addr" of the type "Switch" in this group.

In the group "Regl-2", the value "192.168.20.1" of the parameter "Gateway" of the type "Server" is included in a set of six values "192.168.20.1" through "192.168.20.6" of the parameter "IP-Addr" of the type "Switch" in this group.

In the group "Reg2-1", the value "192.168.30.1" of the parameter "Gateway" of the type "Server" is included in a set of six values "192.168.30.1" through "192.168.30.6" of the parameter "IP-Addr" of the type "Switch" in this group.

In the group "Reg2-2", the value "192.168.40.1" of the parameter "Gateway" of the type "Server" is included in a set of six values "192.168.40.1" through "192.168.40.6" of the parameter "IP-Addr" of the type "Switch" in this group.

The analysis unit 120 creates a parameter feature table 114 based on the features extracted in the manner described above, and stores the parameter feature table 114 in the storage unit 110. The parameter feature table 114 contains information indicating the above features (a1) through (a4), (b1), (b2), and (c1).

Further, the analysis unit 120 generates information used for verification of requirements based on the parameter feature table 114. This information is used by the verification unit 130 for verification of a new infrastructure. For example, the verification unit 130 performs verification of requirements corresponding to scopes for the respective parameters, using a UML verification tool called UML-based Specification Environment (USE). Note that the USE is an example of an UML verification tool, and other verification tools may be used.

With the USE, it is possible to verify, based on input of information indicating a UML object diagram to be checked and Object Constraint Language (OCL) formulas describing constraints on objects, whether the UML object diagram satisfies the constraints. For use of the USE, the following references may be referred to.
(Reference 1) Martin Gogolla, Fabian Buttner, and Mark Richters, "USE: A UML-Based Specification Environment for Validating UML and OCL", Science of Computer Programming, 69:27-34, 2007"
(Reference 2) USE: The UML-based Specification Environment, Web page URL: sourceforge.net/apps/mediawiki/ useocl/
(Reference 3) International workshop UML and Formal Methods, Web page URL: www-public.intevry.fr/~gibson/Workshops/UML-FM-2012.html

The requirements extracted by the analysis unit 120 are converted into OCL formulas and input to the verification unit 130. Further, information indicating a UML object diagram of a new infrastructure is input to the verification unit 130. The verification unit 130 verifies whether values of parameters of the new infrastructure satisfy the requirements, using the function of the USE.

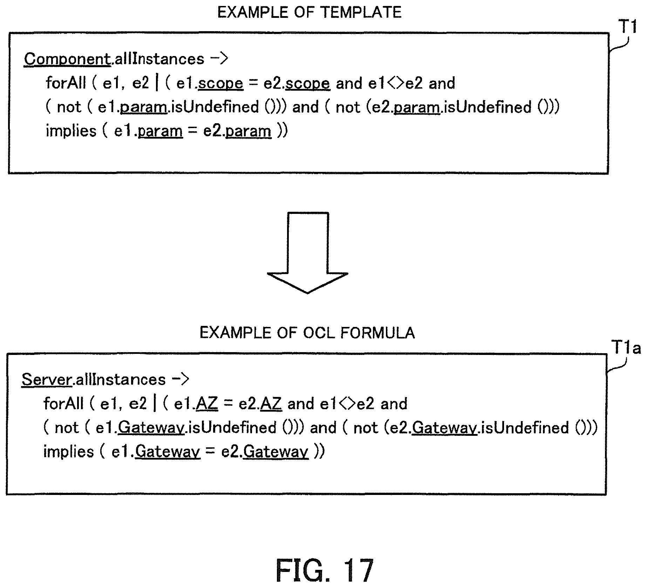

FIG. 17 illustrates an example of a template of an OCL formula. A template T1 is stored in advance in the storage unit 110. The template T1 represents a requirement that "all the values of a parameter (param) of a component (Component) are the same within a scope (scope)". Here, the component indicates the type of the component.

For example, the parameter feature table 114 contains a feature (the above feature (a3)) that all the values of the parameter "Gateway" of the type "Server" are the same within the scope "AZ". This is applied to the template T1. More specifically, the string "Component" in the template T1 is replaced with the string "Server". The string "param" is replaced with the string "Gateway". The string "scope" is replaced with the string "AZ". As a result, the analysis unit 120 obtains an OCL formula T1a describing the requirement corresponding to the above feature (a3).

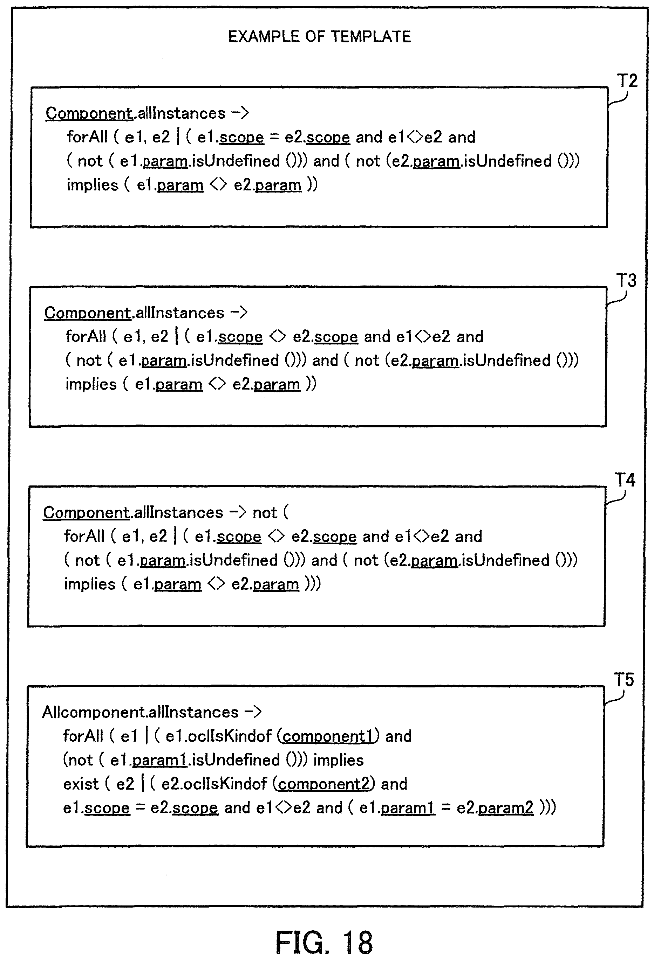

FIG. 18 also illustrates examples of templates of OCL formulas. Template T2, T3, T4, and T5 are stored in advance in the storage unit 110. As in the case of the template T1, the templates T2, T3, T4, and T5 are used for representing the requirements for the respective parameters as OCL formulas.

The template T2 represents a requirement that "all the values of a parameter (param) of a component (Component) are different within a scope (scope)". The analysis unit 120 uses the template T2 for describing the requirements corresponding to the above features (a1), (a2), and (a4). Taking the feature (a1) as an example, the string "Component" is replaced with the string "Server". The string "param" is replaced with the string "Name". The string "scope" is replaced with the string "AZ".

The template T3 represents a requirement that "a parameter (param) of a component (Component) does not have the same value inside and outside a scope (scope)". The analysis unit 120 uses the template T3 for describing the requirements corresponding to the above feature (b2). More specifically, the string "Component" is replaced with the string "Server". The string "param" is replaced with the string "Gateway". The string "scope" is replaced with the string "AZ".

The template T4 represents a requirement that "a parameter (param) of a component (Component) may have the same value inside and outside a scope (scope)". The analysis unit 120 uses the template T4 for describing the requirement corresponding to the above feature (b1). More specifically, the string "Component" is replaced with the string "Server". The string "param" is replaced with the string "Name". The string "scope" is replaced with the string "AZ".

The template T5 represents a requirement that "the values of a parameter (param1) of a component (component1) in a scope (scope) is included in a set of values of a parameter (param2) of another component (component2) in the same scope". The analysis unit 120 uses the template T5 for describing the requirement corresponding to the above feature (c1). More specifically, the string "component1" is replaced with the string "Server". The string "component2" is replaced with the string "Switch". The string "param1" is replaced with the string "Gateway". The string "param2" is replaced with the string "IP-Addr". The string "scope" is replaced with the string "AZ".

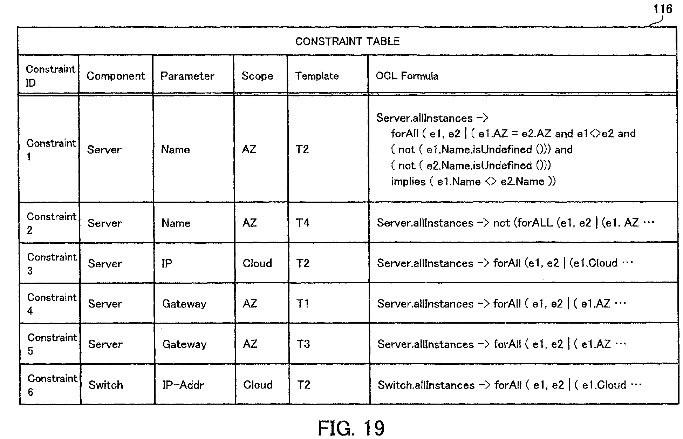

FIG. 19 illustrates an example of a constraint table. A constraint table 116 is created by the analysis unit 120, and is stored in the storage unit 110. The constraint table 116 stores OCL formulas created based on the parameter feature table 114. The constraint table 116 contains the following items: Constraint ID, Component, Parameter, Scope, Template, and OCL Formula.

In the item "ID", information for identifying a record is registered. In the item "Component", a string indicating the type that is assigned to the string "Component" in the template is registered. In the item "Parameter", a string indicating the parameter that is assigned to the string "param" in the template is registered. In the item "Scope", a string indicating the scope that is assigned to the string "scope" in the template is registered. In the item "Template", information indicating the used template is registered. In the item "OCL Formula", an OCL formula created based on the corresponding template is registered.

For example, the constraint table 116 stores a record indicating that: Constraint ID is "Constraint 1"; Component is "Server"; Parameter is "Name"; Scope is "AZ"; Template is "T2"; and OCL Formula is "Server.allInstances -> ... ". This indicates that an OCL formula representing a requirement corresponding to the feature (a1) is created from the template T2 in the manner described above.

The corresponding relationships between the constraint IDs "Constraint 1" through "Constraint 6" and the above features (a1) through (a4), (b1), and (b2) are as follows: The "Constraint 1" corresponds to the feature (a1). The "Constraint 2" corresponds to the feature (b1). The "Constraint 3" corresponds to the feature (a2). The "Constraint 4" corresponds to the feature (a3). The "Constraint 5" corresponds to the feature (b2). The "Constraint 6" corresponds to the feature (a4).

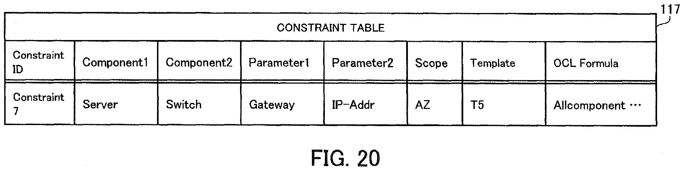

FIG. 20 also illustrates an example of a constraint table. A constraint table 117 is generated by the analysis unit 120, and is stored in the storage unit 110. The constraint table 117 stores an OCL formula corresponding to the feature (c1). The constraint table 117 contains the following items: Constraint ID, Component 1, Component 2, Parameter 1, Parameter 2, Scope, Template, and OCL Formula.

In the item "ID", information for identifying a record is registered. In the item "Component 1", a string indicating the type that is assigned to the string "component1" in the template is registered. In the item "Component 2", a string indicating the type that is assigned to the string "component2" in the template is registered. In the item "Parameter 1", a string indicating the parameter that is assigned to the string "param1" in the template is registered. In the item "Parameter 2", a string indicating the parameter that is assigned to the string "param2" in the template is registered. In the item "Scope", a string indicating the scope that is assigned to the string "scope" in the template is registered. In the item "Template", information indicating the used template is registered.

For example, the constraint table 117 stores a record indicating that: Constraint ID is "Constraint 7", Component 1 is "Server"; Component 2 is "Switch"; Parameter 1 is "Gateway"; Parameter 2 is "IP-Addr"; Scope is "AZ"; Template is "T5"; and OCL Formula is "Allcomponent ... ". This indicates that an OCL formula representing a requirement corresponding to the feature (c1) is created from the template T5 in the manner described above.

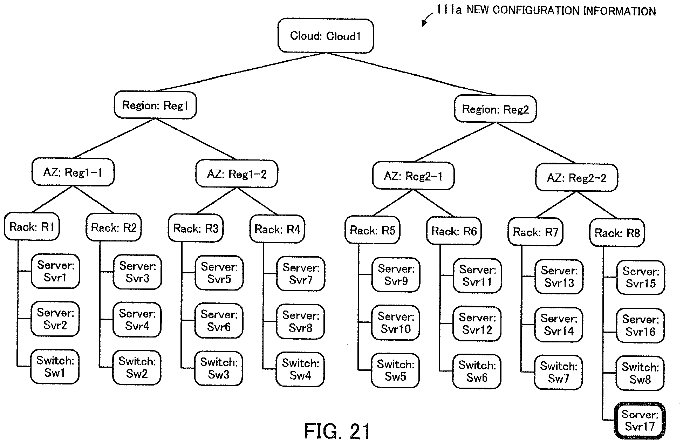

FIG. 21 illustrates an example of new configuration information. New configuration information 111a is input to the configuration requirement creation apparatus 100 when verifying the settings of a new infrastructure, and is stored in the storage unit 110. The new configuration information 111a includes information indicating an apparatus that is added to the configuration information 111. More specifically, a server "Svr17" is added to the group "R8" of the scope "Rack".

Similar to the configuration information 111, the configuration information 111a may be regarded as information defining instances of a class of each scope, and links between the instances. The configuration information 111a also includes links between instances of a class of each apparatus and an instance of a scope. The configuration information 111a may also be described as information indicating a UML object diagram.

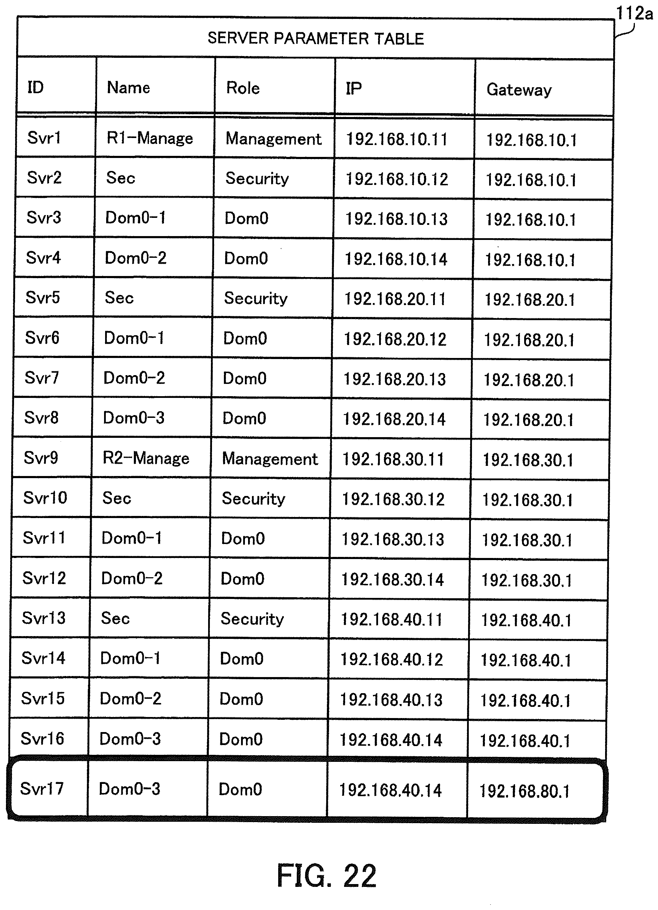

FIG. 22 illustrates an example of a server parameter table. A server parameter table 112a is input to the configuration requirement creation apparatus 100 when verifying the settings of a new infrastructure, and is stored in the storage unit 110. The server parameter table 112a contains the following items: ID, Name, Role, IP, and Gateway. The type of information contained in each item is the same as that of the server parameter table 112.

For example, the server parameter table 112a stores a record indicating that: ID is "Svr17"; Name is "Dom0-3"; Role is "Dom0"; IP is "192.168.40.14"; and Gateway is "192.168.80.1". This indicates values in the respective parameters of the added server in the new configuration information 111a.

The contents of the other records in the server parameter table 112a are the same as those in the records in the server parameter table 112.

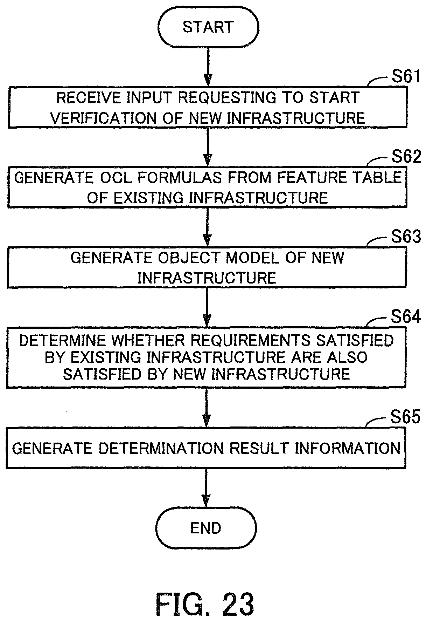

FIG. 23 is a flowchart illustrating an example of requirement verification. In the following, the process illustrated in FIG. 23 will be described in order of step number.
(S61) The analysis unit 120 receives an input requesting to start verification of a new infrastructure. For example, the user may enter an input requesting the configuration requirement creation apparatus 100 to start verification, by using the input device 32. This input specifies, as information on a new infrastructure, the new configuration information 111a, the server parameter table 112a, and the switch parameter table 113 that are stored in the storage unit 110. The information on the infrastructure may be input in the analysis unit 120, together with the input requesting to start verification.
(S62) The analysis unit 120 generates OCL formulas corresponding to the respective requirements, based on the parameter feature table 114 and the templates T1 through T5 that are stored in the storage unit 110. The analysis unit 120 registers the generated OCL formulas in the constraint table 116.
(S63) The analysis unit 120 generates object model information indicating a UML object diagram, based on the new configuration information 111a, the server parameter table 112a, and the switch parameter table 113. If the new configuration information 111a is provided in the form of the object model information, step S63 may be skipped.
(S64) The analysis unit 120 inputs the OCL formulas generated in step S62 and the information generated in step S63 to the verification unit 130. The verification unit 130 determines whether the setting values of the respective parameter satisfy the requirements that are satisfied by the existing infrastructure, using the function of the USE.
(S65) The verification unit 130 generates information indicating the determination result, and stores the information in the storage unit 110. The verification unit 130 may present the contents of the determination results to the user. For example, the verification unit 130 may present the contents of the determination result to the user by causing the display 31 to display the contents. The verification unit 130 may draw the attention of the user to the parameter that is determined not to satisfy the parameter, by highlighting the determination.

In this way, the verification unit 130 performs verification on the new configuration information 111a, the server parameter table 112a, and the switch parameter table 113, to determine whether the requirements indicated by the parameter feature table 114 are satisfied. Note that although the processes of steps S61 through S63 are performed by the analysis unit 120, the verification unit 130 may perform these processes.

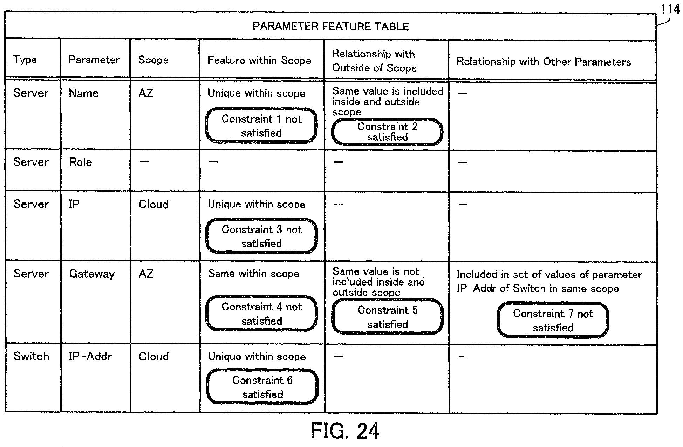

FIG. 24 illustrates an example of a verification result. More specifically, FIG. 24 illustrates the result of verification that is performed on the new configuration information 111a, the server parameter table 112a, and the switch parameter table 113 to determine whether the requirements indicated by the parameter feature table 114 are satisfied. According to the verification result, the requirements corresponding to "Constraint 2", "Constraint 5", and "Constraint 6" of the constraint table 116 are determined to be satisfied by the corresponding parameters. On the other hand, the following constraints are determined not to be satisfied.

For example, the parameter "Name" of the type "Server" does not satisfy "Constraint 1". This is because, in the group "Reg2-2" divided by the scope "AZ", the values of "Name" of the servers with the ID "Svr16" and "Svr17" are the same value "DOM0-3".

Further, the parameter "IP" of the type "Server" does not satisfy "Constraint 3". This is because, in the group "Cloud1" divided by the scope "Cloud", the values of "IP" of the servers with the ID "Svr16" and "Svr17" are the same value "192.168.40.14".

Further, the parameter "Gateway" of the type "Server" does not satisfy "Constraint 4". This is because, in the group "Reg2-2" divided by the scope "AZ", the value "192.168.40.1" of "Gateway" of the IDs "Svr13" through "Svr16" are different from the value "192.168.80.1" of "Gateway" of the ID "Svr17".

Further, the parameter "Gateway" of the type "Server" does not satisfy "Constraint 7". This is because, in the group "Reg2-2" divided by the scope "AZ", the value "192.168.80.1" of "Gateway" of the ID "Svr17" is not included in a set of six values "192.168.40.1" through "192.168.40.6" of "IP-Addr" of the IDs "Sw7" and "Sw8".

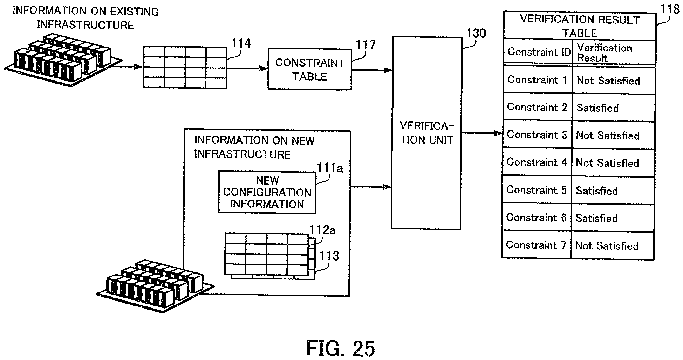

FIG. 25 illustrates an example of the flow of verification. The analysis unit 120 creates the parameter feature table 114 based on the configuration information 111, the server parameter table 112, and the switch parameter table 113. The analysis unit 120 creates OCL formulas based on the parameter feature table 114, and registers the OCL formulas in the constraint table 117. The analysis unit 120 inputs the created OCL formulas to the verification unit 130.

Further, the analysis unit 120 generates object model information indicating a UML object diagram, based on the new configuration information 111a, the server parameter table 112a, and the switch parameter table 113, and inputs the object model information to the verification unit 130.

The verification unit 130 verifies whether the setting values of the parameters after a configuration change satisfy the requirements for the existing infrastructure extracted by the analysis unit 120, based on the input information. The verification unit 130 generates a verification result table 118 as the verification result. As illustrated with reference to FIG. 24, the verification result table 118 stores information indicating whether the requirements represented by the corresponding OCL formulas are satisfied on a per constrain ID basis. The verification result of the respective requirements for the above-described input information (the result of determination whether the requirements are satisfied) is described above with reference to FIG. 24.

In this way, the configuration requirement creation apparatus 100 is capable of appropriately determining information indicating the requirements for the respective parameters corresponding to the scope. For example, there is a case in which a rule is set to setting values of each parameter on a per scope basis in order to control the settings of apparatuses. In this case, if a change is made to the settings of an apparatus without conforming to the rule of each scope, the change might negatively affect operations of the other apparatuses. For example, in the case where overlapping setting values are not allowed for a parameter (for example, "Name", "IP", and so on) in a group divided by the scope, if a plurality of apparatuses in this group have overlapping setting values, a problem might occur in communication between the apparatuses. However, it is not easy to determine what rule is used when making settings in each scope. For example, the location of information indicating the requirements for respective parameters on a per scope basis might be unknown. Further, information indicating the requirements for respective parameters on a per scope basis might not exist.

Accordingly, the configuration requirement creation apparatus 100 extracts, for each parameter, requirements corresponding to the scope. In doing so, the configuration requirement creation apparatus 100 extracts both a first feature established in each of groups divided by a certain scope, and a second feature established among the groups divided by this scope. Therefore, it is possible to create more appropriate requirements on a per scope basis than in the case of extracting only one of the features. In particular, in the case where a certain parameter has a feature in each of groups that are divided by a certain scope, the parameter is highly likely to have a relationship with the values of the parameter in the other groups divided by this scope. The configuration requirement creation apparatus 100 is capable of appropriately determining such a relationship. This allows the user to appropriately identify the requirements corresponding to the scope with reference to the created requirement, and thus to make settings of an added apparatus or existing apparatuses. Accordingly, the risk of making settings not conforming to the rule of each scope may be reduced.

Further, if a certain feature is detected for a parameter, the configuration requirement creation apparatus 100 determines whether there is a relationship between the parameter and another parameter. This is because, for example, the setting value of a certain type of apparatus (for example, the setting value of the default gateway of a server) may be related to the setting value of another type of apparatus (for example, the setting value of the IP address of an L3 switch). By extracting such a relationship, it is possible to more appropriately determine requirements corresponding to the scope.

In the second embodiment, specific examples of features of parameters to be extracted have been described. However, features other than those may also be extracted. For example, as a feature within a scope, other than the feature that all the values are the same or different, a feature that "the setting values are sequential numbers that increment (or decrement) by a given value (for example, one)" may be extracted. The features to be extracted may be arbitrarily specified to the configuration requirement creation apparatus 100. By causing the configuration requirement creation apparatus 100 to extract features corresponding to the system, it is possible to more appropriately determine requirements corresponding to the scope.

Further, the configuration requirement creation apparatus 100 checks the settings of respective parameters of each apparatus after a change in the settings, against the extracted requirements, and verifies whether the setting values of the respective parameters after the change in the settings are appropriate. The user may perform such verification using the configuration requirement creation apparatus 100, before changing the settings. This allows the user to check whether there is a setting error more quickly and accurately, than in the case where the user checks whether there is a setting error by comparing the extracted requirements and the design of the parameters. Further, it is possible to reduce the work of the user. In other words, it is possible to improve the efficiency of the verification process. As a result, the time taken to change the settings of each apparatus may be reduced.

Note that information processing in the first embodiment may be realized by causing the computing unit 1b to execute a program. Further, the information processing in the second embodiment may be realized by causing the processor 101 to execute a program. The program may be stored in a computer-readable recording medium (for instance, the optical disc 33, the memory device 34, the memory card 36, and the like).

For example, the program may be stored in a recording medium and distributed. The program may be stored in another computer and distributed via a network, for example. The computer may store (install) the program stored in the recording medium or the program received from the other computer in its storage device such as the RAM 102, the HDD 103, and so on, and may read and execute the program from the storage device.

According to one aspect, it is possible to appropriately determine a requirement corresponding to a management unit of apparatuses.

## Claims

1. A computer program which causes a computer to perform a process in an information processing system including a plurality of apparatuses, wherein said plurality of apparatuses (5, 5a, 5b, 5c, 5d, 5e, 5f and 5g) is grouped in a plurality of sets (2, 3, 3a, 4, 4a, 4b and 4c) and wherein said plurality of sets is determined by management units (A, B and C), wherein each of said management units divides said plurality of apparatuses between a corresponding group of sets, and wherein said management units have an inclusion relationship represented by hierarchical structure and wherein setting values of a plurality of attributes (X and Y) of each of said plurality of apparatuses are stored,
said process comprising:
specifying a first management unit (C) among said plurality of management units and a first attribute among said plurality of attributes, wherein said first management unit divides said plurality of apparatuses between a first group of sets (4, 4a, 4b and 4c), and wherein said first management unit has a first feature,
and wherein said first feature is one of:
a) a feature that the setting values of said first attribute in the plurality of apparatuses belonging to each set of said first group are the same;
b) a feature that the setting values of said first attribute in the plurality of apparatuses belonging to each set of said first group are different from each other;
detecting a second feature indicating, for the setting values of the first attribute having the first feature, whether there are overlapping setting values among the sets of said first group; and
creating information indicating configuration requirements for the setting values of said first attribute in said first management unit, based on said first and second features.

2. The computer program according to claim 1, wherein the specifying includes specifying a largest management unit having the first feature with regard to setting values of any one of the attributes in each of sets of apparatuses.

3. The computer program according to any one of claims 1 through 2, wherein:
the specifying further includes searching, within each set divided by the specified management unit, for another attribute whose set of values includes the set of values that the attribute having the first feature takes; and
the creating includes creating the information indicating requirements, based also on a result of the searching.

4. The computer program according to any one of claims 1 through 3, wherein the process further includes:
determining, based on the created information indicating requirements, whether setting values of the plurality of attributes of a plurality of other apparatuses satisfy the requirements, and outputting information indicating a result of the determination.

5. The computer program according to any one of claims 1 through 4, wherein the inclusion relationship is a spatial inclusion relationship among the plurality of management units (A, B, and C).

6. A configuration requirement creation apparatus for an information processing system including a plurality of apparatuses, wherein said plurality of apparatuses (5, 5a, 5b, 5c, 5d, 5e, 5f and 5g) is grouped in a plurality of sets (2, 3, 3a, 4, 4a, 4b and 4c) and wherein said plurality of sets is determined by management units (A, B and C), wherein each of said management units divides said plurality of apparatuses between a corresponding group of sets, and wherein said management units have an inclusion relationship represented by hierarchical structure and wherein setting values of a plurality of attributes (X and Y) of each of said plurality of apparatuses are stored in memory means (1a),
said apparatus comprising computing means (1b) for:
specifying a first management unit (C) among said plurality of management units and a first attribute among said plurality of attributes, wherein said first management unit divides said plurality of apparatuses between a first group of sets (4, 4a, 4b and 4c), and wherein said first management unit has a first feature, and wherein said first feature is one of:
a) a feature that the setting values of said first attribute in the plurality of apparatuses belonging to each set of said first group are the same;
b) a feature that the setting values of said first attribute in the plurality of apparatuses belonging to each set of said first group are different from each other;
detecting a second feature indicating, for the setting values of the first attribute having the first feature, whether there are overlapping setting values among the sets of said first group, and
creating information indicating a configuration requirement for the setting values of said first attribute in said first management unit based on said first and second features.

7. A configuration requirement creation method executed by a computer in an information processing system including a plurality of apparatuses, wherein said plurality of apparatuses (5, 5a, 5b, 5c, 5d, 5e, 5f and 5g) is grouped in a plurality of sets (2, 3, 3a, 4, 4a, 4b and 4c) and wherein said plurality of sets is determined by management units (A, B and C), wherein each of said management units divides said plurality of apparatuses between a corresponding group of sets, and wherein said management units have an inclusion relationship represented by hierarchical structure and wherein setting values of a plurality of attributes (X and Y) of each of said plurality of apparatuses are stored, said configuration requirement creation method comprising:
specifying a first management unit (C) among said plurality of management units and a first attribute among said plurality of attributes, wherein said first management unit divides said plurality of apparatuses between a first group of sets (4, 4a, 4b and 4c), and wherein said first management unit has a first feature,
and wherein said first feature is one of:
a) a feature that the setting values of said first attribute in the plurality of apparatuses belonging to each set of said first group are the same;
b) a feature that the setting values of said first attribute in the plurality of apparatuses belonging to each set of said first group are different from each other;
detecting a second feature indicating, for the setting values of the first attribute having the first feature, whether there are overlapping setting values among the sets of said first group; and
creating information indicating configuration requirements for the setting values of said first attribute in said first management unit, based on said first and second features.

## Patentansprüche

1. Computerprogramm, das einen Computer dazu bringt, einen Prozess in einem Informationsverarbeitungssystem durchzuführen, das eine Vielzahl von Vorrichtungen einschließt, wobei die Vielzahl von Vorrichtungen (5, 5a, 5b, 5c, 5d, 5e, 5f und 5g) in einer Vielzahl von Sätzen (2, 3, 3a, 4, 4a, 4b und 4c) gruppiert ist und wobei die Vielzahl von Sätzen durch Verwaltungseinheiten (A, B und C) bestimmt ist, wobei jede der Verwaltungseinheiten die Vielzahl von Vorrichtungen zwischen einer entsprechenden Gruppe von Sätzen aufteilt und wobei die Verwaltungseinheiten eine Einschlussbeziehung besitzen, die durch eine hierarchische Struktur dargestellt ist, und wobei Einstellwerte einer Vielzahl von Attributen (X und Y) von jeder aus der Vielzahl von Vorrichtungen gespeichert sind,
wobei der Prozess Folgendes umfasst:
Spezifizieren einer ersten Verwaltungseinheit (C) unter der Vielzahl von Verwaltungseinheiten und eines ersten Attributs unter der Vielzahl von Attributen, wobei die erste Verwaltungseinheit die Vielzahl von Vorrichtungen zwischen einer ersten Gruppe von Sätzen (4, 4a, 4b und 4c) aufteilt und wobei die erste Verwaltungseinheit ein erstes Merkmal aufweist
und wobei das erste Merkmal eines der folgenden ist:
a) ein Merkmal, wonach die Einstellwerte des ersten Attributs in der Vielzahl von Vorrichtungen, die zu jedem Satz der ersten Gruppe gehören, gleich sind;
b) ein Merkmal, wonach die Einstellwerte des ersten Attributs in der Vielzahl von Vorrichtungen, die zu jedem Satz der ersten Gruppe gehören, sich voneinander unterscheiden;
Detektieren eines zweiten Merkmals, das für die Einstellwerte des ersten Attributs mit dem ersten Merkmal angibt, ob es unter den Sätzen der ersten Gruppe einander überschneidende Einstellwerte gibt; und
Erzeugen von Informationen, die Konfigurationsanforderungen für die Einstellwerte des ersten Attributs in der ersten Verwaltungseinheit basierend auf dem ersten und dem zweiten Merkmal angeben.

2. Computerprogramm nach Anspruch 1, wobei das Spezifizieren das Spezifizieren einer größten Verwaltungseinheit mit dem ersten Merkmal in Hinblick auf Einstellwerte irgendeines der Attribute in jedem der Sätze von Vorrichtungen einschließt.

3. Computerprogramm nach einem der Ansprüche 1 bis 2, wobei:
das Spezifizieren weiter das Suchen nach einem weiteren Attribut, dessen Satz von Werten den Satz von Werten einschließt, den das Attribut mit dem ersten Merkmal nimmt, innerhalb jedes durch die spezifizierte Verwaltungseinheit aufgeteilten Satzes einschließt; und
das Erzeugen das Erzeugen der Informationen, die Anforderungen angeben, ebenfalls basierend auf einem Ergebnis der Suche einschließt.

4. Computerprogramm nach einem der Ansprüche 1 bis 3, wobei der Prozess weiter Folgendes einschließt:
Bestimmen basierend auf den erzeugten Informationen, die Anforderungen angeben, ob Einstellwerte der Vielzahl von Attributen einer Vielzahl anderer Vorrichtungen den Anforderungen genügen, und Ausgeben von Informationen, die ein Ergebnis der Bestimmung angeben.

5. Computerprogramm nach einem der Ansprüche 1 bis 4, wobei die Einschlussbeziehung eine räumliche Einschlussbeziehung unter der Vielzahl von Verwaltungseinheiten (A, B und C) ist.

6. Konfigurationsanforderungserzeugungsvorrichtung für ein Informationsverarbeitungssystem, das eine Vielzahl von Vorrichtungen einschließt, wobei die Vielzahl von Vorrichtungen (5, 5a, 5b, 5c, 5d, 5e, 5f und 5g) in einer Vielzahl von Sätzen (2, 3, 3a, 4, 4a, 4b und 4c) gruppiert ist und wobei die Vielzahl von Sätzen durch Verwaltungseinheiten (A, B und C) bestimmt ist, wobei jede der Verwaltungseinheiten die Vielzahl von Vorrichtungen zwischen einer entsprechenden Gruppe von Sätzen aufteilt und wobei die Verwaltungseinheiten eine Einschlussbeziehung besitzen, die durch eine hierarchische Struktur dargestellt ist, und wobei Einstellwerte einer Vielzahl von Attributen (X und Y) von jeder aus der Vielzahl von Vorrichtungen auf einem Speichermittel (1a) gespeichert sind,
wobei die Vorrichtung Berechnungsmittel (1b) für Folgendes umfasst:
Spezifizieren einer ersten Verwaltungseinheit (C) unter der Vielzahl von Verwaltungseinheiten und eines ersten Attributs unter der Vielzahl von Attribute, wobei die erste Verwaltungseinheit die Vielzahl von Vorrichtungen zwischen einer ersten Gruppe von Sätzen (4, 4a, 4b und 4c) aufteilt und wobei die erste Verwaltungseinheit ein erstes Merkmal aufweist
und wobei das erste Merkmal eines der folgenden ist:
a) ein Merkmal, wonach die Einstellwerte des ersten Attributs in der Vielzahl von Vorrichtungen, die zu jedem Satz der ersten Gruppe gehören, gleich sind;
b) ein Merkmal, wonach die Einstellwerte des ersten Attributs in der Vielzahl von Vorrichtungen, die zu jedem Satz der ersten Gruppe gehören, sich voneinander unterscheiden;
Detektieren eines zweiten Merkmals, das für die Einstellwerte des ersten Attributs mit dem ersten Merkmal angibt, ob es unter den Sätzen der ersten Gruppe einander überschneidende Einstellwerte gibt; und
Erzeugen von Informationen, die Konfigurationsanforderungen für die Einstellwerte des ersten Attributs in der ersten Verwaltungseinheit basierend auf dem ersten und dem zweiten Merkmal angeben.

7. Konfigurationsanforderungserzeugungsverfahren, ausgeführt durch einen Computer in einem Informationsverarbeitungssystem, das eine Vielzahl von Vorrichtungen einschließt, wobei die Vielzahl von Vorrichtungen (5, 5a, 5b, 5c, 5d, 5e, 5f und 5g) in einer Vielzahl von Sätzen (2, 3, 3a, 4, 4a, 4b und 4c) gruppiert ist und wobei die Vielzahl von Sätzen durch Verwaltungseinheiten (A, B und C) bestimmt ist, wobei jede der Verwaltungseinheiten die Vielzahl von Vorrichtungen zwischen einer entsprechenden Gruppe von Sätzen aufteilt und wobei die Verwaltungseinheiten eine Einschlussbeziehung besitzen, die durch eine hierarchische Struktur dargestellt ist, und wobei Einstellwerte einer Vielzahl von Attributen (X und Y) von jeder aus der Vielzahl von Vorrichtungen gespeichert sind, wobei das Konfigurationsanforderungserzeugungsverfahren Folgendes umfasst:
Spezifizieren einer ersten Verwaltungseinheit (C) unter der Vielzahl von Verwaltungseinheiten und eines ersten Attributs unter der Vielzahl von Attribute, wobei die erste Verwaltungseinheit die Vielzahl von Vorrichtungen zwischen einer ersten Gruppe von Sätzen (4, 4a, 4b und 4c) aufteilt und wobei die erste Verwaltungseinheit ein erstes Merkmal aufweist
und wobei das erste Merkmal eines der folgenden ist:
a) ein Merkmal, wonach die Einstellwerte des ersten Attributs in der Vielzahl von Vorrichtungen, die zu jedem Satz der ersten Gruppe gehören, gleich sind;
b) ein Merkmal, wonach die Einstellwerte des ersten Attributs in der Vielzahl von Vorrichtungen, die zu jedem Satz der ersten Gruppe gehören, sich voneinander unterscheiden;
Detektieren eines zweiten Merkmals, das für die Einstellwerte des ersten Attributs mit dem ersten Merkmal angibt, ob es unter den Sätzen der ersten Gruppe einander überschneidende Einstellwerte gibt; und
Erzeugen von Informationen, die Konfigurationsanforderungen für die Einstellwerte des ersten Attributs in der ersten Verwaltungseinheit basierend auf dem ersten und dem zweiten Merkmal angeben.

## Revendications

1. Programme d'ordinateur qui amène un ordinateur à effectuer un processus dans un système de traitement d'informations comprenant une pluralité d'appareils, dans lequel ladite pluralité d'appareils (5, 5a, 5b, 5c, 5d, 5e, 5f et 5g) est groupée dans une pluralité d'ensembles (2, 3, 3a, 4, 4a, 4b et 4c) et dans lequel ladite pluralité d'ensembles est déterminée par des unités de gestion (A, B et C), dans lequel chacune desdites unités de gestion divise ladite pluralité d'appareils entre un groupe correspondant d'ensembles, et dans lequel lesdites unités de gestion ont une relation d'inclusion représentée par une structure hiérarchique et dans lequel des valeurs de réglage d'une pluralité d'attributs (X et Y) de chacun de ladite pluralité d'appareils sont stockées,
ledit processus comprenant :
la spécification d'une première unité de gestion (C) parmi ladite pluralité d'unités de gestion et d'un premier attribut parmi ladite pluralité d'attributs, dans lequel ladite première unité de gestion divise ladite pluralité d'appareils entre un premier groupe d'ensembles (4, 4a, 4b et 4c), et dans lequel ladite première unité de gestion a une première caractéristique et dans lequel ladite première caractéristique est une parmi :
a) une caractéristique que les valeurs de réglage dudit premier attribut de la pluralité d'appareils appartenant à chaque ensemble dudit premier groupe sont les mêmes ;
b) une caractéristique que les valeurs de réglage dudit premier attribut de la pluralité d'appareils appartenant à chaque ensemble dudit premier groupe sont différentes les unes des autres ;
détecter une seconde caractéristique indiquant, pour les valeurs de réglage du premier attribut ayant la première caractéristique, s'il y a ou non des valeurs de réglage en chevauchement parmi les ensembles dudit premier groupe ; et
créer des informations indiquant des exigences de configuration pour les valeurs de réglage dudit premier attribut de ladite première unité de gestion, sur la base desdites première et seconde caractéristiques.

2. Programme d'ordinateur selon la revendication 1, dans lequel la spécification comprend la spécification d'une unité de gestion la plus grande ayant la première caractéristique au regard de valeurs de réglage de l'un quelconque des attributs dans chacun des ensembles d'appareils.

3. Programme d'ordinateur selon l'une quelconque des revendications 1 à 2, dans lequel :
la spécification comprend en outre la recherche, dans chaque ensemble divisé par l'unité de gestion spécifiée, d'un autre attribut dont l'ensemble de valeurs comprend l'ensemble de valeurs que l'attribut ayant la première caractéristique adopte ; et
la création comprend la création des informations indiquant des exigences, également sur la base du résultat de la recherche.

4. Programme d'ordinateur selon l'une quelconque des revendications 1 à 3, dans lequel le processus comprend en outre :
la détermination sur la base des informations créées indiquant des exigences, que des valeurs de réglage de la pluralité d'attributs d'une pluralité d'autres appareils répondent ou non aux exigences, et la délivrance en sortie d'informations indiquant un résultat de la détermination.

5. Programme d'ordinateur selon l'une quelconque des revendications 1 à 4, dans lequel la relation d'inclusion est une relation d'inclusion spatiale parmi la pluralité d'unités de gestion (A, B et C).

6. Appareil de création d'exigences de configuration pour un système de traitement d'informations comprenant une pluralité d'appareils, dans lequel ladite pluralité d'appareils (5, 5a, 5b, 5c, 5d, 5e, 5f et 5g) est groupée dans une pluralité d'ensembles (2, 3, 3a, 4, 4a, 4b et 4c) et dans lequel ladite pluralité d'ensembles est déterminée par des unités de gestion (A, B et C), dans lequel chacune desdites unités de gestion divise ladite pluralité d'appareils entre un groupe correspondant d'ensembles, et dans lequel lesdites unités de gestion ont une relation d'inclusion représentée par une structure hiérarchique et dans lequel des valeurs de réglage d'une pluralité d'attributs (X et Y) de chacun de ladite pluralité d'appareils sont stockées dans des moyens de mémorisation (1a),
ledit appareil comprenant des moyens informatiques (1b) pour :
spécifier une première unité de gestion (C) parmi ladite pluralité d'unités de gestion et un premier attribut parmi ladite pluralité d'attributs, dans lequel ladite première unité de gestion divise ladite pluralité d'appareils entre un premier groupe d'ensembles (4, 4a, 4b et 4c), et dans lequel ladite première unité de gestion a une première caractéristique, et dans lequel ladite première caractéristique est une parmi :
a) une caractéristique que les valeurs de réglage dudit premier attribut de la pluralité d'appareils appartenant à chaque ensemble dudit premier groupe sont les mêmes ;
b) une caractéristique que les valeurs de réglage dudit premier attribut de la pluralité d'appareils appartenant à chaque ensemble dudit premier groupe sont différentes les unes des autres ;
détecter une seconde caractéristique indiquant, pour les valeurs de réglage du premier attribut ayant la première caractéristique, s'il y a ou non des valeurs de réglage en chevauchement parmi les ensembles dudit premier groupe, et
créer des informations indiquant une exigence de configuration pour les valeurs de réglage dudit premier attribut dans ladite première unité de gestion sur la base desdites première et seconde caractéristiques.

7. Procédé de création d'exigences de configuration exécuté par un ordinateur dans un système de traitement d'informations comprenant une pluralité d'appareils, dans lequel ladite pluralité d'appareils (5, 5a, 5b, 5c, 5d, 5e, 5f et 5g) est groupée en une pluralité d'ensembles (2, 3, 3a, 4, 4a, 4b et 4c) et dans lequel ladite pluralité d'ensembles est déterminée par des unités de gestion (A, B et C), dans lequel chacune desdites unités de gestion divise ladite pluralité d'appareils entre un groupe correspondant d'ensembles, et dans lequel lesdites unités de gestion ont une relation d'inclusion représentée par une structure hiérarchique et dans lequel des valeurs de réglage d'une pluralité d'attributs (X et Y) de chacun de ladite pluralité d'appareils sont stockées, ledit procédé de création d'exigences de configuration comprenant :
spécifier une première unité de gestion (C) parmi ladite pluralité d'unités de gestion et un premier attribut parmi ladite pluralité d'attributs, dans lequel ladite première unité de gestion divise ladite pluralité d'appareils entre un premier groupe d'ensembles (4, 4a, 4b et 4c), et dans lequel ladite première unité de gestion a une première caractéristique, et dans lequel ladite première caractéristique est une parmi :
a) une caractéristique que les valeurs de réglage dudit premier attribut de la pluralité d'appareils appartenant à chaque ensemble dudit premier groupe sont les mêmes ;
b) une caractéristique que les valeurs de réglage dudit premier attribut de la pluralité d'appareils appartenant à chaque ensemble dudit premier groupe sont différentes les unes des autres ;
détecter une seconde caractéristique indiquant, pour les valeurs de réglage du premier attribut ayant la première caractéristique, s'il y a ou non des valeurs de réglage en chevauchement parmi les ensembles dudit premier groupe, et
créer des informations indiquant des exigences de configuration pour les valeurs de réglage dudit premier attribut dans ladite première unité de gestion, sur la base desdites première et seconde caractéristiques.
